(19) Europäisches Patentamt
European Patent Office
Office européen des brevets

(11) EP 1 605 758 B1

# (12) EUROPEAN PATENT SPECIFICATION

(45) Date of publication and mention of the grant of the patent:
**10.09.2008 Bulletin 2008/37**

(21) Application number: **04717572.4**

(22) Date of filing: **05.03.2004**

(51) Int Cl.:
***A01N 43/54*** $^{(2006.01)}$ ***A01N 43/90*** $^{(2006.01)}$
***A01N 43/40*** $^{(2006.01)}$ ***A01N 41/10*** $^{(2006.01)}$
***A01N 25/32*** $^{(2006.01)}$

(86) International application number:
**PCT/EP2004/002239**

(87) International publication number:
**WO 2004/080183 (23.09.2004 Gazette 2004/39)**

## (54) HERBICIDAL MIXTURES BASED ON 3-PHENYLURACILS

HERBIZIDE MISCHUNGEN AUF 3-PHENYLURACIL-GRUNDLAGE

MELANGES HERBICIDES A BASE DE 3-PHENYLURACILES

(84) Designated Contracting States:
**AT BE BG CH CY CZ DE DK EE ES FI FR GB GR HU IE IT LI LU MC NL PL PT RO SE SI SK TR**

(30) Priority: **13.03.2003 US 453959 P**

(43) Date of publication of application:
**21.12.2005 Bulletin 2005/51**

(73) Proprietor: **BASF SE**
**67056 Ludwigshafen (DE)**

(72) Inventors:
- **ZAGAR, Cyrill**
  **68167 Mannheim (DE)**
- **WITSCHEL, Matthias**
  **67098 Bad Dürkheim (DE)**
- **LANDES, Andreas**
  **67354 Römerberg-Heiligenstein (DE)**

(56) References cited:
**WO-A-01/83459** **WO-A-96/07323**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 605 758 B1

## Description

The present invention relates to herbicidally active compositions comprising 3-phenyluracils and at least one further herbicide and optionally at least one safener.

In crop protection products, it is desirable in principle to increase the specificity and the reliability of the action of active compounds. In particular, it is desirable for the crop protection product to control the harmful plants effectively and, at the same time, to be tolerated by the useful plants in question.

Various publications have described 3-phenyluracils as being highly effective herbicides. However, their compatibility with dicotyledonous crop plants such as cotton, oilseed rape and some graminaceous plants such as barley, millet, corn, rice, wheat and sugar cane is not always satisfactory, i.e. in addition to the harmful plants, the crop plants are also damaged to an extent which is not acceptable. It is possible to spare the useful plants by lowering the application rates; however the extent of the control of harmful plants is naturally also reduced.

It is known that certain combinations of different herbicides with specific action result in an enhanced activity of a herbicide component by synergism. As a consequence, it is possible to reduce the application rates of herbicidally active compounds required for controlling the harmful plants.

Furthermore, it is known that in some cases better crop plant compatibility can be achieved by joint application of specifically acting herbicides with organic active compounds, some of which are themselves herbicidally active. In these cases, the active compounds act as antidote or antagonist, and, owing to the fact that they can reduce or even prevent damage to the crop plants, they are also referred to as safeners.

3-Phenyluracils of the formula I:

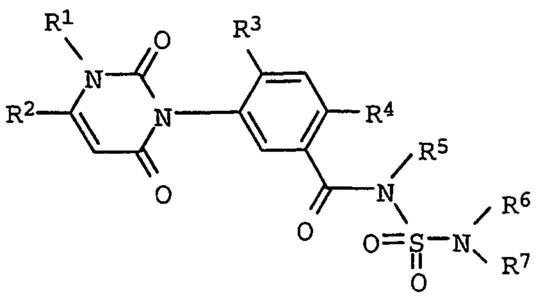

. (I)

in which the variables $R^1$ - $R^7$ are as defined below:

- $R^1$ is methyl or $NH_2$;
- $R^2$ is $C_1$-$C_2$-haloalkyl;
- $R^3$ is hydrogen or halogen;
- $R^4$ is halogen or cyano;
- $R^5$ is hydrogen, cyano, $C_1$-$C_6$-alkyl, $C_1$-$C_6$-alkoxy, $C_1$-$C_4$-alkoxy-$C_1$-$C_4$-alkyl, $C_3$-$C_7$-cycloalkyl, $C_3$-$C_6$-alkenyl, $C_3$-$C_6$-alkynyl or benzyl which is unsubstituted or substituted by halogen or $C_1$-$C_6$-alkyl;
- $R^6$, $R^7$ independently of one another are hydrogen, $C_1$-$C_6$-alkyl, $C_1$-$C_6$-alkoxy, $C_3$-$C_6$-alkenyl, $C_3$-$C_6$-alkynyl, $C_3$-$C_7$-cycloalkyl, $C_3$-$C_7$-cycloalkenyl, phenyl or benzyl, where each of the 8 abovementioned substituents is unsubstituted or substituted by 1 to 6 halogen atoms and/or by one, two or three groups selected from: OH, $NH_2$, CN, $CONH_2$, $C_1$-$C_4$-alkoxy, $C_1$-$C_4$-haloalkoxy, $C_1$-$C_4$-alkylthio, $C_1$-$C_4$-haloalkylthio, $C_1$-$C_4$-alkylsulfonyl, $C_1$-$C_4$-haloalkyl-sulfonyl, $C_1$-$C_4$-alkylamino, di($C_1$-$C_4$-alkyl)amino, formyl, $C_1$-$C_4$-alkylcarbonyl, $C_1$-$C_4$-alkoxycarbonyl, $C_1$-$C_4$-alkyl-aminocarbonyl, di($C_1$-$C_4$-alkyl)aminocarbonyl, $C_3$-$C_7$-cyclo-alkyl, phenyl and benzyl; or
- $R^6$, $R^7$ together with the nitrogen atom to which they are attached form a 3-, 4-, 5-, 6- or 7-membered saturated or unsaturated nitrogen heterocycle which may be substituted by 1 to 6 methyl groups and which may contain 1 or 2 further heteroatoms selected from the group consisting of nitrogen, oxygen and sulfur as ring members,

and their agriculturally acceptable salts are disclosed in the earlier patent application WO 01/83459. Certain herbicidal

compositions of 3-phenyluracils of formula I are disclosed in the earlier patent application WO 03/24221.

It is an object of the present invention to increase the herbicidal activity of 3-phenyluracils of the formula I against undesirable harmful plants and to improve simultaneously their compatibility with useful plants.

We have found that this object is achieved, surprisingly, by compositions comprising at least one 3-phenyluracil of the formula I and
at least one further herbicide B, selected from the group consisting of
aminopyralid and its agriculturally acceptable derivates,
4-hydroxy-3-{[2-methyl-6-(trifluoromethyl)-3-pyridinyl]carbonyl}bicyclo[3.2.1]oct-3-en-2-one,
4-hydroxy-3-{ [2- (2-methoxyethoxy)methyl-6- (trifluoromethyl)-3-pyridinyl]carbonyl}bicyclo[3.2.1]oct-3-en-2-one,
4-hydroxy-3-[4-(methylsulfonyl)-2-nitrobenzoyl]bicyclo[3.2.1]-oct-3-en-2-one,
8-(2,6-diethyl-4-methylphenyl)-1,2,4,5-tetra-hydro-9-hydroxy-7H-pyrazolo[1,2-d][1,4,5]oxadiazepin-7-one,
pivalic acid [8-(2,6-diethyl-4-methylphenyl)-1,2,4,5-tetra-hydro-7-oxo-7H-pyrazolo[1,2-d][1,4,5]oxadiazepin-9-yl] ester (pinoxaden) and
[N-(5,7-dimethoxy[1,2,4]triazolo[1,5-a]pyrimidin-2-yl)-2-methoxy-4-(trifluoromethyl)-3-pyridinesulfonamide,
including their respective agriculturally acceptable salts;
and optionally
at least one safener C, selected from the group consisting of benoxacor, cloquintocet, cyometrinil, dichlormid, dicyclonon, dietholate, fenchlorazole, fenclorim, flurazole, fuxofenim, flurilazole, isoxadifen, mefenpyr, mephenate, naphthalic anhydride, 2,2,5-trimethyl-3-(dichloracetyl-1,3-oxazolidine (R-29148), 4-(dichloroacetyl)-1-oxa-4-azaspiro[4.5]decane (AD-67, MON 4660) and oxabetrinil,
including their agriculturally acceptable salts and, provided they have a carboxyl group, of their agriculturally acceptable derivatives.

The invention relates in particular to compositions in the form of herbicidally active crop protection compositions comprising a herbicidally effective amount of at least one mixture of I with B and optionally C, as defined above, and at least one liquid and/or solid carrier and, if desired, one or more surfactants and, if desired, one or more further auxiliaries customary for crop protection compositions. The invention also relates to compositions in the form of a crop protection composition formulated as a 2-component composition comprising a first component which comprises the active compound A, a solid or liquid carrier and, if appropriate, one or more surfactants, and a second component which comprises at least one further herbicide B and optionally a safener C, a solid or liquid carrier and, if appropriate, one or more surfactants, where both components may additionally comprise further auxiliaries customary for crop protection compositions.

The invention furthermore relates to a method for controlling undesirable vegetation, in particular in crops of cereals, corn, soybeans, rice, oilseed rape, cotton, potatoes, groundnuts or in perennial crops, and also in crops which, by genetic engineering or by breeding, are resistant to one or more herbicides or to attack by insects. The invention also relates to a method for the desiccation or defoliation of plants. In the latter methods it is immaterial whether the herbicidally active compounds of components A) and B) and optionally C) are formulated and applied jointly or separately, and, in the case of separate application, in which order the application takes place.

The organic moieties mentioned in the definition of the substituents $R^2$, $R^5$, $R^6$, $R^7$ in formula I or as radicals on cycloalkyl, phenyl or heterocyclic rings are - like the term halogen - collective terms for individual enumerations of the individual group members. All hydrocarbon chains, i.e. all alkyl, haloalkyl, cycloalkyl, alkoxy, haloalkoxy, alkylamino, alkylthio, haloalkyl-thio, alkylsulfinyl, haloalkylsulfinyl, alkylsulfonyl, haloalkyl-sulfonyl, alkenyl and alkynyl groups and corresponding moieties in larger groups such as alkylcarbonyl, alkylaminocarbonyl, dialkylaminocarbonyl, alkoxycarbonyl, etc., can be straight-chain or branched, the prefix $C_n$-$C_m$ denoting in each case the possible number of carbon atoms in the group. Halogenated substituents preferably carry one, two, three, four or five identical or different halogen atoms. The term halogen denotes in each case fluorine, chlorine, bromine or iodine.

Examples of other meanings are:

- $C_1$-$C_4$-alkyl: $CH_3$, $C_2H_5$, n-propyl, $CH(CH_3)_2$, n-butyl, $CH(CH_3)$ -$C_2H_5$, $CH_2$-$CH(CH_3)_2$ and $C(CH_3)_3$;

- $C_1$-$C_6$-alkyl: $C_1$-$C_4$-alkyl as mentioned above, and also, for example, n-pentyl, 1-methylbutyl, 2-methylbutyl, 3-methylbutyl, 2,2-dimethylpropyl, 1-ethylpropyl, n-hexyl, 1,1-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl or 1-ethyl-2-methylpropyl, preferably methyl, ethyl, n-propyl, 1-methylethyl, n-butyl, 1,1-dimethylethyl, n-pentyl or n-hexyl;

- $C_1$-$C_4$-alkoxy: $OCH_3$, $OC_2H_5$, n-propoxy, $OCH(CH_3)_2$, n-butoxy, $OCH(CH_3)$-$C_2H_5$, $OCH_2$-$CH(CH_3)_2$ or $OC(CH_3)_3$, preferably $OCH_3$, $OC_2H_5$ or $OCH(CH_3)_2$;

- $C_1$-$C_4$-haloalkoxy: a $C_1$-$C_4$-alkoxy radical as mentioned above which is partially or fully substituted by fluorine, chlorine, bromine and/or iodine, i.e., for example, $OCH_2F$, $OCHF_2$, $OCF_3$, $OCH_2Cl$, $OCH(Cl)_2$, $OC(Cl)_3$, chlorofluoromethoxy, dichlorofluoromethoxy, chlorodifluoromethoxy, 2-fluoroethoxy, 2-chloroethoxy, 2-bromoethoxy, 2-iodoethoxy, 2,2-difluoroethoxy, 2,2,2-trifluoroethoxy, 2-chloro-2-fluoroethoxy, 2-chloro-2,2-difluoroethoxy, 2,2-dichloro-2-fluoroethoxy, 2,2,2-trichloroethoxy, $OC_2F_5$, 2-fluoropropoxy, 3-fluoropropoxy, 2,2-difluoropropoxy, 2,3-difluoropropoxy, 2-chloropropoxy, 3-chloropropoxy, 2,3-dichloropropoxy, 2-bromopropoxy, 3-bromopropoxy, 3,3,3-trifluoropropoxy, 3,3,3-trichloropropoxy, 2,2,3,3,3-pentafluoropropoxy, $OCF_2$-$C_2F_5$, 1- ($CH_2F$)-2-fluoroethoxy, 1-($CH_2Cl$)-2-chloroethoxy, 1-($CH_2Br$)-2-bromoethoxy, 4-fluorobutoxy, 4-chlorobutoxy, 4-bromobutoxy or nonafluorobutoxy, preferably $OCHF_2$, $OCF_3$, dichlorofluoromethoxy, chlorodifluoromethoxy or 2,2,2-trifluoroethoxy;

- $C_1$-$C_4$-alkylthio: $SCH_3$, $SC_2H_5$, n-propylthio, $SCH(CH_3)_2$, n-butylthio, $SCH(CH_3)$-$C_2H_5$, $SCH_2$-$CH(CH_3)_2$ or $SC(CH_3)_3$, preferably $SCH_3$ or $SC_2H_5$ ;

- $C_1$-$C_4$-haloalkylthio: a $C_1$-$C_4$-alkylthio radical as mentioned above which is partially or fully substituted by fluorine, chlorine, bromine and/or iodine, i.e., for example, $SCH_2F$, $SCHF_2$, $SCH_2Cl$, $SCH(Cl)_2$, $SC(Cl)_3$, $SCF_3$, chlorofluoromethylthio, dichlorofluoromethylthio, chlorodifluoromethylthio, 2-fluoroethylthio, 2-chloroethylthio, 2-bromoethylthio, 2-iodoethylthio, 2,2-difluoroethylthio, 2,2,2-trifluoroethylthio, 2-chloro-2-fluoroethylthio, 2-chloro-2,2-difluoroethylthio, 2,2-dichloro-2-fluoroethylthio, 2,2,2-trichloroethylthio, $SC_2F_5$, 2-fluoropropylthio, 3-fluoropropylthio, 2,2-difluoropropylthio, 2,3-difluoropropylthio, 2-chloropropylthio, 3-chloropropylthio, 2,3-dichloropropylthio, 2-bromopropylthio, 3-bromopropylthio, 3,3,3-trifluoropropylthio, 3,3,3-trichloropropylthio, $SCH_2$-$C_2F_5$, $SCF_2$-$C_2F_5$, 1-($CH_2F$)-2-fluoroethylthio, 1-($CH_2Cl$)-2-chloroethylthio, 1-($CH_2Br$)-2-bromoethylthio, 4-fluorobutylthio, 4-chlorobutylthio, 4-bromobutylthio or $SCF_2$-$CF_2$-$C_2F_5$, preferably $SCHF_2$, $SCF_3$, dichlorofluoromethylthio, chlorodifluoromethylthio or 2,2,2-trifluoroethylthio;

- $C_1$-$C_4$-alkoxy-$C_1$-$C_4$-alkyl: $C_1$-$C_4$-alkyl which is substituted by $C_1$-$C_4$-alkoxy - as mentioned above -, i.e., for example, $CH_2$-$OCH_3$, $CH_2$-$OC_2H_5$, n-propoxymethyl, $CH_2$-$OCH(CH_3)_2$, n-butoxymethyl, (1-methylpropoxy)methyl, (2-methylpropoxy)methyl, $CH_2$-$OC(CH_3)_3$, 2-(methoxy)ethyl, 2-(ethoxy)ethyl, 2-(n-propoxy)ethyl, 2-(1-methylethoxy) ethyl, 2-(n-butoxy)ethyl, 2-(1-methylpropoxy)ethyl, 2-(2-methylpropoxy)ethyl, 2-(1,1-dimethylethoxy)ethyl, 2-(methoxy) propyl, 2-(ethoxy)propyl, 2-(n-propoxy)propyl, 2-(1-methylethoxy)propyl, 2-(n-butoxy)propyl, 2-(1-methylpropoxy) propyl, 2-(2-methylpropoxy)propyl, 2-(1,1-dimethylethoxy)propyl, 3-(methoxy)propyl, 3-(ethoxy)propyl, 3-(n-propoxy)propyl, 3-(1-methylethoxy)propyl, 3-(n-butoxy)propyl, 3-(1-methylpropoxy)propyl, 3-(2-methylpropoxy)propyl, 3-(1,1-dimethylethoxy)propyl, 2-(methoxy) butyl, 2-(ethoxy)butyl, 2-(n-propoxy)butyl, 2-(1-methylethoxy)butyl, 2-(n-butoxy)butyl, 2-(1-methylpropoxy)butyl, 2-(2-methylpropoxy)butyl, 2-(1,1-dimethylethoxy)butyl, 3-(methoxy)butyl, 3-(ethoxy)butyl, 3-(n-propoxy)butyl, 3-(1-methylethoxy)butyl, 3-(n-butoxy)butyl, 3-(1-methylpropoxy)butyl, 3-(2-methyl-propoxy)butyl, 3-(1,1-dimethylethoxy) butyl, 4-(methoxy)butyl, 4-(ethoxy)butyl, 4-(n-propoxy)butyl, 4-(1-methylethoxy)butyl, 4-(n-butoxy)butyl, 4-(1-methylpropoxy)butyl, 4-(2-methyl-propoxy)butyl or 4-(1,1-dimethylethoxy) butyl, preferably $CH_2$-$OCH_3$, $CH_2$-$OC_2H_5$, 2-methoxyethyl or 2-ethoxyethyl;

- ($C_1$-$C_4$-alkyl)carbonyl: CO-$CH_3$, CO-$C_2H_5$, CO-$CH_2$-$C_2H_5$, CO-$CH(CH_3)_2$, n-butylcarbonyl, CO-$CH(CH_3)$-$C_2H_5$, CO-$CH_2$-$CH(CH_3)_2$ or CO-$C(CH_3)_3$, preferably CO-$CH_3$ or CO-$C_2H_5$;

- ($C_1$-$C_4$-alkoxy)carbonyl: CO-$OCH_3$, CO-$OC_2H_5$, n-propoxycarbonyl, CO-$OCH(CH_3)_2$, n-butoxycarbonyl, CO-$OCH(CH_3)$-$C_2H_5$, CO-$OCH_2$-$CH(CH_3)_2$ or CO-$OC(CH_3)_3$, preferably CO-$OCH_3$ or CO-$OC_2H_5$;

- $C_1$-$C_4$-alkylsulfonyl: $SO_2$-$CH_3$, $SO_2$-$C_2H_5$, $SO_2$-$CH_2$-$C_2H_5$, $SO_2$-$CH(CH_3)_2$, n-butylsulfonyl, $SO_2$-$CH(CH_3)$-$C_2H_5$, $SO_2$-$CH_2$-$CH(CH_3)_2$ or $SO_2$-$C(CH_3)_3$, preferably $SO_2$-$CH_3$ or $SO_2$-$C_2H_5$;

- $C_1$-$C_4$-haloalkylsulfonyl: a $C_1$-$C_4$-alkylsulfonyl radical - as mentioned above - which is partially or fully substituted by fluorine, chlorine, bromine and/or iodine, i.e., for example, $SO_2$-$CH_2F$, $SO_2$-$CHF_2$, $SO_2$-$CF_3$, $SO_2$-$CH_2Cl$, $SO_2$-$CH(Cl)_2$, $SO_2$-$C(Cl)_3$, chlorofluoromethylsulfonyl, dichlorofluoromethylsulfonyl, chlorodifluoromethylsulfonyl, 2-fluoroethylsulfonyl, 2-chloroethylsulfonyl, 2-bromoethylsulfonyl, 2-iodoethylsulfonyl, 2,2-difluoroethylsulfonyl, 2,2,2-trifluoroethylsulfonyl, 2-chloro-2-fluoroethylsulfonyl, 2-chloro-2,2-difluoroethylsulfonyl, 2,2-dichloro-2-fluoroethylsulfonyl, 2,2,2-trichloroethylsulfonyl, $SO_2$-$C_2F_5$, 2-fluoropropylsulfonyl, 3-fluoropropylsulfonyl, 2,2-difluoropropylsulfonyl, 2,3-difluoropropylsulfonyl, 2-chloropropylsulfonyl, 3-chloropropylsulfonyl, 2,3-dichloropropylsulfonyl, 2-bromopropylsulfonyl, 3-bromopropylsulfonyl, 3,3,3-trifluoropropylsulfonyl, 3,3,3-trichloropropylsulfonyl, $SO_2$-$CH_2$-$C_2F_5$, $SO_2$-$CF_2$-$C_2F_5$, 1-(fluoromethyl)-2-fluoroethylsulfonyl, 1-(chloromethyl)-2-chloroethylsulfonyl, 1-(bromomethyl)-2-bromoethylsulfonyl, 4-fluorobutylsulfonyl, 4-chlorobutylsulfonyl, 4-bromobutylsulfonyl or nonafluorobutylsulfonyl, preferably $SO_2$-$CF_3$, $SO_2$-$CH_2Cl$ or 2,2,2-trifluoroethylsulfonyl;

- $C_1$-$C_4$-alkylamino: $NH(CH_3)$, $NH(C_2H_5)$, propylamino, $NH[CH(CH_3)_2]$, butylamino, 1-methylpropylamino, 2-methylpropylamino, $NH[C(CH_3)_3]$ %

- di($C_1$-$C_4$-alkyl)amino: $N(CH_3)_2$, $N(C_2H_5)_2$, N,N-dipropylamino, $N[CH(CH_3)_2]_2$, N,N-dibutylamino, N,N-di(1-methylpropyl)amino, N,N-di(2-methylpropyl)amino, $N[C(CH_3)_3]_2$, N-ethyl-N-methylamino, N-methyl-N-propylamino, N-methyl-N-(1-methylethyl) amino, N-butyl-N-methylamino, N-methyl-N-(1-methylpropyl)amino, N-methyl-N-(2-methylpropyl)amino, N-(1,1-dimethylethyl)-N-methylamino, N-ethyl-N-propylamino, N-ethyl-N-(1-methylethyl)amino, N-butyl-N-ethylamino, N-ethyl-N-(1-methylpropyl)amino, N-ethyl-N-(2-methylpropyl)amino, N-ethyl-N-(1,1-dimethylethyl)amino, N-(1-methylethyl)-N-propylamino, N-butyl-N-propylamino, N-(1-methylpropyl)-N-propylamino, N-(2-methylpropyl)-N-propylamino, N-(1,1-dimethylethyl)-N-propylamino, N-butyl-N-(1-methylethyl)amino, N-(1-methylethyl)-N-(1-methylpropyl)amino, N-(1-methylethyl)-N-(2-methylpropyl)amino, N-(1,1-dimethylethyl)-N-(1-methylethyl)amino, N-butyl-N-(1-methylpropyl)amino, N-butyl-N-(2-methylpropyl)amino, N-butyl-N-(1,1-dimethylethyl)amino, N-(1-methylpropyl)-N-(2-methylpropyl)amino, N-(1,1-dimethylethyl)-N-(1-methylpropyl)amino or N-(1,1-dimethylethyl)-N-(2-methylpropyl)amino, preferably $N(CH_3)_2$ or $N(C_2H_5)$;

- $C_1$-$C_4$-alkylaminocarbonyl: for example methylaminocarbonyl, ethylaminocarbonyl, 1-methylethylaminocarbonyl, propylaminocarbonyl, butylaminocarbonyl, 1-methylpropylaminocarbonyl, 2-methylpropylaminocarbonyl, 1,1-dimethylethylaminocarbonyl;

- di($C_1$-$C_4$-alkyl)aminocarbonyl: for example N,N-dimethylaminocarbonyl, N,N-diethylaminocarbonyl, N,N-di(1-methylethyl)aminocarbonyl, N,N-dipropylaminocarbonyl, N,N-dibutylaminocarbonyl, N,N-di(1-methylpropyl)aminocarbonyl, N,N-di(2-methylpropyl)aminocarbonyl, N,N-di(1,1-dimethylethyl)aminocarbonyl, N-ethyl-N-methylaminocarbonyl, N-methyl-N-propylaminocarbonyl, N-methyl-N-(1-methylethyl)aminocarbonyl, N-butyl-N-methylaminocarbonyl, N-methyl-N-(1-methylpropyl)aminocarbonyl, N-methyl-N-(2-methylpropyl)aminocarbonyl, N-(1,1-dimethylethyl)-N-methylaminocarbonyl, N-ethyl-N-propylaminocarbonyl, N-ethyl-N-(1-methylethyl)aminocarbonyl, N-butyl-N-ethylaminocarbonyl, N-ethyl-N-(1-methylpropyl)aminocarbonyl, N-ethyl-N-(2-methylpropyl)aminocarbonyl, N-ethyl-N-(1,1-dimethylethyl)aminocarbonyl, N-(1-methylethyl)-N-propylaminocarbonyl, N-butyl-N-propylaminocarbonyl, N-(1-methylpropyl)-N-propylaminocarbonyl, N-(2-methylpropyl)-N-propylaminocarbonyl, N-(1,1-dimethylethyl)-N-propylaminocarbonyl, N-butyl-N-(1-methylethyl)aminocarbonyl, N-(1-methylethyl)-N-(1-methylpropyl)aminocarbonyl, N-(1-methylethyl)-N-(2-methylpropyl)aminocarbonyl, N-(1,1-dimethylethyl)-N-(1-methylethyl)aminocarbonyl, N-butyl-N-(1-methylpropyl)aminocarbonyl, N-butyl-N-(2-methylpropyl)aminocarbonyl, N-butyl-N-(1,1-dimethylethyl) aminocarbonyl, N-(1-methylpropyl)-N-(2-methylpropyl)aminocarbonyl, N-(1,1-dimethylethyl)-N-(1-methylpropyl) aminocarbonyl or N-(1,1-dimethylethyl)-N-(2-methylpropyl)aminocarbonyl;

- $C_3$-$C_6$-alkenyl: prop-1-en-1-yl, allyl, 1-methylethenyl, 1-buten-1-yl, 1-buten-2-yl, 1-buten-3-yl, 2-buten-1-yl, 1-methylprop-1-en-1-yl, 2-methylprop-1-en-1-yl, 1-methyl-prop-2-en-1-yl, 2-methylprop-2-en-1-yl, n-penten-1-yl, n-penten-2-yl, n-penten-3-yl, n-penten-4-yl, 1-methyl-but-1-en-1-yl, 2-methylbut-1-en-1-yl, 3-methylbut-1-en-1-yl, 1-methylbut-2-en-1-yl, 2-methylbut-2-en-1-yl, 3-methyl-but-2-en-1-yl, 1-methylbut-3-en-1-yl, 2-methylbut-3-en-1-yl, 3-methylbut-3-en-1-yl, 2,1-dimethylprop-2-en-1-yl, 1,2-dimethylprop-1-en-1-yl, 1,2-dimethylprop-2-en-1-yl, 1-ethylprop-1-en-2-yl, 1-ethylprop-2-en-1-yl, n-hex-1-en-1-yl, n-hex-2-en-1-yl, n-hex-3-en-1-yl, n-hex-4-en-1-yl, n-hex-5-en-1-yl, 1-methylpent-1-en-1-yl, 2-methylpent-1-en-1-yl, 3-methylpent-1-en-1-yl, 4-methylpent-1-en-1-yl, 1-methylpent-2-en-1-yl, 2-methylpent-2-en-1-yl, 3-methylpent-2-en-1-yl, 4-methylpent-2-en-1-yl, 1-methylpent-3-en-1-yl, 2-methylpent-3-en-1-yl, 3-methylpent-3-en-1-yl, 4-methylpent-3-en-1-yl, 1-methylpent-4-en-1-yl, 2-methylpent-4-en-1-yl, 3-methylpent-4-en-1-yl, 4-methylpent-4-en-1-yl, 1,1-dimethylbut-2-en-1-yl, 1,1-dimethylbut-3-en-1-yl, 1,2-dimethylbut-1-en-1-yl, 1,2-dimethylbut-2-en-1-yl, 1,2-dimethylbut-3-en-1-yl, 1,3-dimethylbut-1-en-1-yl, 1,3-dimethylbut-2-en-1-yl, 1,3-dimethylbut-3-en-1-yl, 2,2-dimethylbut-3-en-1-yl, 2,3-dimethylbut-1-en-1-yl, 2,3-dimethylbut-2-en-1-yl, 2,3-dimethylbut-3-en-1-yl, 3,3-dimethylbut-1-en-1-yl, 3,3-dimethylbut-2-en-1-yl, 1-ethylbut-1-en-1-yl, 1-ethylbut-2-en-1-yl, 1-ethylbut-3-en-1-yl, 2-ethylbut-1-en-1-yl, 2-ethylbut-2-en-1-yl, 2-ethylbut-3-en-1-yl, 1,1,2-trimethylprop-2-en-1-yl, 1-ethyl-1-methylprop-2-en-1-yl, 1-ethyl-2-methylprop-1-en-1-yl or 1-ethyl-2-methylprop-2-en-1-yl;

- $C_3$-$C_6$-alkynyl: prop-1-yn-1-yl, prop-2-yn-1-yl, n-but-1-yn-1-yl, n-but-1-yn-3-yl, n-but-1-yn-4-yl, n-but-2-yn-1-yl, n-pent-1-yn-1-yl, n-pent-1-yn-3-yl, n-pent-1-yn-4-yl, n-pent-1-yn-5-yl, n-pent-2-yn-1-yl, n-pent-2-yn-4-yl, n-pent-2-yn-5-yl, 3-methylbut-1-yn-3-yl, 3-methylbut-1-yn-4-yl, n-hex-1-yn-1-yl, n-hex-1-yn-3-yl, n-hex-1-yn-4-yl, n-hex-1-yn-5-yl, n-hex-1-yn-6-yl, n-hex-2-yn-1-yl, n-hex-2-yn-4-yl, n-hex-2-yn-5-yl, n-hex-2-yn-6-yl, n-hex-3-yn-1-yl, n-hex-3-yn-2-yl, 3-methylpent-1-yn-1-yl, 3-methylpent-1-yn-3-yl, 3-methylpent-1-yn-4-yl, 3-methylpent-1-yn-5-yl, 4-methylpent-1-yn-1-yl, 4-methylpent-2-yn-4-yl or 4-methylpent-2-yn-5-yl, preferably prop-2-yn-1-yl;

- $C_3$-$C_7$-cycloalkyl: cyclopropyl, cyclobutyl, cyclopentyl, cyclohexyl or cycloheptyl;

The active compound aminopyralid and the active compounds C are known herbicides and safeners, see, for example
The Compendium of Pesticide Common Names (http://www.hclrss.demon.co.uk/index.html);
Farm Chemicals Handbook 2000 Vol. 86, Meister Publishing Company, 2000;
B. Hock, C. Fedtke, R. R. Schmidt, Herbizide, Georg Thieme Verlag, Stuttgart 1995;
W. H. Ahrens, Herbicide Handbook, 7th Edition, Weed Science Society of America, 1994; and
K. K. Hatzios, Herbicide Handbook, Supplement to 7th Edition, Weed Science Society of America, 1998.

2,2,5-Trimethyl-3-(dichloroacetyl)-1,3-oxazolidine (CAS No. 52836-31-4) is also known under the name R-29148.
4-(Dichloroacetyl)-1-oxa-4- azaspiro[4.5]decane (CAS No. 71526-07-03) is also known under the names AD-67 and MON 4660.
4-Hydroxy-3-([2-methyl-6-(trifluoromethyl)-3-pyridinyl]carbonyl) bicyclo[3.2.1] oct-3-en-2-one (CAS 261634-96-2) is known from
WO 2000/15615. 4-Hydroxy-3-[[2-[(2-methoxyethoxy)methyl]-6-(trifluoromethyl)-3-pyridinyl]carbonyl]bicyclo[3.2.1]oct-3-en-2-one (CAS 352010-68-5) is known from WO 2001/94339.
4-Hydroxy-3-[4-methylsulfonyl)-2-nitrobenzoyl]bicyclo[3.2.1] oct-3-en-2-one (CAS 137014-61-0) is known from WO 2000/00029.
8-(2,6-Diethyl-4-methylphenyl)-1,2,4,5-tetrahydro-9-hydroxy-7H-pyrazolo[1,2-d] [1,4,5]oxadiazepin-7-one (CAS 243973-19-5) and pivalic acid [8-(2,6-diethyl-4-methylphenyl)-1,2,4,5-tetrahydro-7-oxo-7H-pyrazolo[1,2-d][1,4,5]oxadiazepin-9-yl] ester (CAS 243973-20-8) are known from WO 1999/47525 and WO 2000/47585. Privalic acid [8-(2,6-diethyl-4-methylphenyl)-1,2,4,5-tetrahydro-7-oxo-7H-pyrazolo [1,2-d] [1,4,5]oxadiazepin-9-yl] ester is also known under the name pinoxaden.

[N-5,7-Dimethoxy[1,2,4]triazolo[1,5-a]pyrimidin-2-yl)-2-methoxy -4-(trifluoromethyl)-3-pyridinesulfonamide (CAS 422556-08-9) is known from WO 2002/36595.

If the phenyluracils I, the herbicides B and/or the safeners C are capable of forming geometrical isomers, for example E/Z isomers, it is possible to use both the pure isomers and mixtures thereof in the compositions according to the invention. If the phenyluracils I, the herbicides B and/or the safeners C have one or more centers of chirality and, as a consequence, are present as enantiomers or diastereomers, it is possible to use both the pure enantiomers and diastereomers and their mixtures in the compositions according to the invention.

If the phenyluracils I, the herbicides B and/or the safeners C have functional groups which can be ionized, they can also be used in the form of their agriculturally acceptable salts. In general, the salts of those cations are suitable whose cations have no adverse effect on the action of the active compounds ("agricultural acceptable").

Preferred cations are the ions of the alkali metals, preferably of lithium, sodium and potassium, of the alkaline earth metals, preferably of calcium and magnesium, and of the transition metals, preferably of manganese, copper, zinc and iron, furthermore ammonium and substituted ammonium in which one to four hydrogen atoms are replaced by $C_1$-$C_4$-alkyl, hydroxy-$C_1$-$C_4$-alkyl, $C_1$-$C_4$-alkoxy-$C_1$-$C_4$-alkyl, hydroxy-$C_1$-$C_4$-alkoxy-$C_1$-$C_4$-alkyl, phenyl or benzyl, preferably ammonium, methylammonium, isopropylammonium, dimethylammonium, diisopropylammonium, trimethylammonium, tetramethylammonium, tetraethylammonium, tetrabutylammonium, 2-hydroxyethylammonium, 2-(2-hydroxyethoxy)eth-1-ylammonium, di(2-hydroxyeth-1-yl)ammonium, benzyltrimethylammonium, benzyltriethylammonium, furthermore phosphonium ions, sulfonium ions, preferably tri($C_1$-$C_4$-alkyl)sulfonium such as trimethylsulfonium, and sulfoxonium ions, preferably tri($C_1$-$C_4$-alkyl)sulfoxonium.

It is possible to use, for example, the active compounds of formula I and aminopyralid,
4-hydroxy-3-{[2-methyl-6-(trifluoromethyl-3-pyridinyl]carbonyl}bicyclo[3.2.1]oct-3-en-2-one,
4-hydroxy-3-{[2-(2-methoxyethoxy)methyl-6-(trifluoromethyl)-3-pyridinyl]carbonyl}bicyclo[3.2.1]oct-3-en-2-one,
4-hydroxy-3-[4-(methylsulfonyl)-2-nitrobenzoyl]bicyclo[3.2.1]oct-3-en-2-one,
8-(2,6-diethyl-4-methylpenyl)-1,2,4,5-tetrahydro-9-hydroxy-7H-pyrazolo[1,2-d][1,4,5]oxadiazepin-7-one,
[N-(5,7-dimethoxy[1,2,4]triazolo[1,5-a)]pyrimidin-2-yl)-2-methoxy-4-(trifluoromethyl)-3-pyridinesulfonamide,
cloquintocet, fenchlorazole, isoxadifen and mefenpyr, if desired, as salts of the agriculturally useful cations mentioned above, in the compositions according to the invention.

In the compositions according to the invention, the active compounds B and/or C which carry a carboxyl group can, instead of the active compounds mentioned above, also be employed in the form of an agriculturally acceptable derivative, for example as amides such as mono- or di-$C_1$-$C_6$-alkylamides or arylamides, as esters, for example as allyl esters, propargyl esters, $C_1$-$C_{10}$-alkyl esters or alkoxyalkyl esters, and also as thioesters, for example as $C_1$-$C_{10}$-alkyl thioesters. Examples of active compounds having a COOH group which can also be employed as derivatives are: aminopyralid, cloquintocet, fenchlorazole, isoxadifen ad mefenpyr.

Preferred mono- and di-$C_1$-$C_6$-alkylamides are the methyl- and the dimethylamides.

Preferred arylamides are, for example, the anilidines and the 2-chloroanilides.

Preferred alkyl esters are, for example, the methyl, ethyl, propyl, isopropyl, butyl, isobutyl, pentyl, mexyl (1-methylhexyl) or isooctyl (2-ethylhexyl) esters.

Preferred $C_1$-$C_4$-alkoxy-$C_2$-$C_4$-alkyl esters are the straight-chain or branched $C_1$-$C_4$-alkoxyethyl esters, for example the methoxyethyl, ethoxyethyl or butoxyethyl esters. An example of the straight-chain or branched $C_1$-$C_{10}$-alkyl thioesters is the ethyl thioester.

Among the 3-phenyluracils of the formula I, preference is given to those in which the variables $R^1$ to $R^7$ have the meanings given below:

$R^1$ is methyl or $NH_2$;

$R^2$ is trifluoromethyl;

$R^3$ is hydrogen, fluorine or chlorine, in particular fluorine;

$R^4$ is halogen or cyano, in particular chlorine or cyano;

$R^5$ is hydrogen;

$R^6$, $R^7$ independently of one another are hydrogen, $C_1$-$C_6$-alkyl, $C_3$-$C_6$-alkenyl, $C_3$-$C_6$-alkynyl, $C_3$-$C_7$-cycloalkyl, $C_3$-$C_7$-cycloalkenyl, phenyl or benzyl or

$R^6$, $R^7$ together with the nitrogen atom to which they are attached form a pyrrolidine, piperidine, morpholine, N-methylpiperazine or perhydroazepine ring.

$R^6$, $R^7$ are in particular identical or different $C_1$-$C_6$-alkyl radicals.

In a particularly preferred embodiment of the invention, the compositions comprise at least one 3-phenyluracil I in which the variables $R^1$ to $R^7$ in formula I have the following meanings (hereinbelow also referred to as phenyluracils Ia):

$R^1$ is methyl;
$R^2$ is trifluoromethyl;
$R^3$ is fluorine;
$R^4$ is chlorine;
$R^5$ is hydrogen;
$R^6$, $R^7$ independently of one another are $C_1$-$C_6$-alkyl.

In another particularly preferred embodiment of the invention, the compositions comprise at least one 3-phenyluracil I in which the variables $R^1$ to $R^7$ in formula I have the meanings below (hereinbelow also referred to as phenyluracils Ib):

$R^1$ is $NH_2$;
$R^2$ is trifluoromethyl;
$R^3$ is fluorine;
$R^4$ is chlorine;
$R^5$ is hydrogen;
$R^6$, $R^7$ independently of one another are $C_1$-$C_6$-alkyl.

Examples of particularly preferred herbicides Ia or Ib are the compounds of the formula I' listed below in which $R^1$, $R^6$ and $R^7$ together have the meanings given in one row of table 1 (compounds I.1 to I.74).

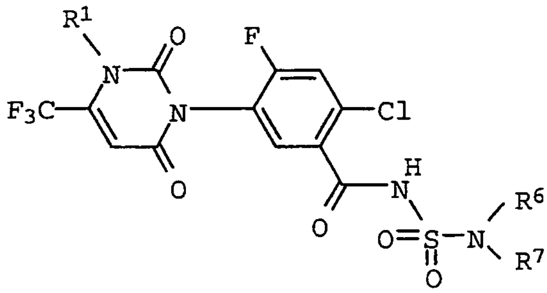

(I')

Table 1

| Phenyluracil I | $R^1$ | $R^6$ | $R^7$ |
|---|---|---|---|
| I.1 | methyl | methyl | methyl |
| I.2 | amino | methyl | methyl |
| I.3 | methyl | methyl | ethyl |
| I.4 | amino | methyl | ethyl |
| I.5 | methyl | methyl | propyl |
| I.6 | amino | methyl | propyl |
| I.7 | methyl | methyl | isopropyl |
| I.8 | amino | methyl | isopropyl |
| I.9 | methyl | methyl | butyl |
| I.10 | amino | methyl | butyl |
| I.11 | methyl | methyl | s-butyl |
| I.12 | amino | methyl | s-butyl |
| I.13 | methyl | methyl | isobutyl |
| I.14 | amino | methyl | isobutyl |
| I.15 | methyl | methyl | t-butyl |
| I.16 | amino | methyl | t-butyl |
| I.17 | methyl | methyl | n-pentyl |
| I.18 | amino | methyl | n-pentyl |
| I.19 | methyl | methyl | n-hexyl |
| I.20 | amino | methyl | n-hexyl |
| I.21 | methyl | methyl | allyl |
| I.22 | amino | methyl | allyl |
| I.23 | methyl | methyl | propargyl |
| I.24 | amino | methyl | propargyl |
| I.25 | methyl | methyl | phenyl |
| I.26 | amino | methyl | phenyl |
| I.27 | methyl | methyl | benzyl |
| I.28 | amino | methyl | benzyl |
| I.29 | methyl | ethyl | ethyl |

(continued)

| Phenyluracil I | $R^1$ | $R^6$ | $R^7$ |
|---|---|---|---|
| I.30 | amino | ethyl | ethyl |
| I.31 | methyl | ethyl | propyl |
| I.32 | amino | ethyl | propyl |
| I.33 | methyl | ethyl | isopropyl |
| I.34 | amino | ethyl | isopropyl |
| I.35 | methyl | ethyl | butyl |
| I.36 | amino | ethyl | butyl |
| I.37 | methyl | ethyl | n-pentyl |
| I.38 | amino | ethyl | n-pentyl |
| I.39 | methyl | ethyl | n-hexyl |
| I.40 | amino | ethyl | n-hexyl |
| I.41 | methyl | propyl | propyl |
| I.42 | amino | propyl | propyl |
| I.43 | methyl | propyl | isopropyl |
| I.44 | amino | propyl | isopropyl |
| I.45 | methyl | propyl | butyl |
| I.46 | amino | propyl | butyl |
| I.47 | methyl | propyl | n-pentyl |
| I.48 | amino | propyl | n-pentyl |
| I.49 | methyl | propyl | n-hexyl |
| I.50 | amino | propyl | n-hexyl |
| I.51 | methyl | isopropyl | isopropyl |
| I.52 | amino | isopropyl | isopropyl |
| I.53 | methyl | isopropyl | butyl |
| I.54 | amino | isopropyl | butyl |
| I.55 | methyl | isopropyl | n-pentyl |
| I.56 | amino | isopropyl | n-pentyl |
| I.57 | methyl | isopropyl | n-hexyl |
| I.58 | amino | isopropyl | n-hexyl |
| I.59 | methyl | butyl | butyl |
| I.60 | amino | butyl | butyl |
| I.61 | methyl | butyl | n-pentyl |
| I.62 | amino | butyl | n-pentyl |
| I.63 | methyl | butyl | n-hexyl |
| I.64 | amino | butyl | n-hexyl |
| I.65 | methyl | n-pentyl | n-pentyl |
| I.66 | amino | n-pentyl | n-pentyl |
| I.67 | methyl | n-pentyl | n-hexyl |

(continued)

| Phenyluracil I | $R^1$ | $R^6$ | $R^7$ |
|---|---|---|---|
| I.68 | amino | n-pentyl | n-hexyl |
| I.69 | methyl | n-hexyl | n-hexyl |
| I.70 | amino | n-hexyl | n-hexyl |
| I.71 | methyl | $-(CH2)_4-$ | |
| I.72 | amino | $-(CH_2)_4-$ | |
| I.73 | methyl | $-(CH_2)_2-O-(CH_2)_2-$ | |
| I.74 | amino | $-(CH_2)_2-O-(CH_2)_2-$ | |

Preferred herbicides B which can be used according to the present invention in combination with the 3-phenyluracils of formula I are selected from the group consisting of
aminopyralid and its agriculturally acceptable derivatives, 4-hydroxy-3-{(2-methyl-6-(trifluoromethyl)-3-pyridinyl]carbonyl} bicyclo[3.2.1]oct-3-en-2-one,
4-hydroxy-3-{[2-(2-methoxyethoxy)methyl-6-(trifluormethyl)-3-pyridinyl]carbonyl}bicyclo [3.2.1]oct-3-en-2-one,
4-hydroxy-3-[4-(methylsulfonyl)-2-nitrobenzoyl]bicyclo[3.2.1] oct-3-en-2-one,
8-(2,6-diethyl-4-methylphenyl)-1,2,4,5-tetrahydro-9-hydroxy-7H-pyrazolo[1,2-d][1,4,5] oxadiazepin-7-one and pivalic acid [8-(2,6-diethyl-4-methylphenyl)-1,2,4,5-tetrahydro-7-oxo-7H-pyrazolo[1,2-d][1,4,5]oxadiazepin-9-yl] ester (pinoxaden),
including their respective agriculturally acceptable salts;

Also preferred herbicides B which can be used according to the present invention in combination with the 3-phenyluracils of the formula I are selected from the group consisting of
aminopyralid and its agriculturally acceptable derivatives,
4-hydroxy-3-{[2-(2-methoxyethoxy)methyl-6-(trifluormethyl)-3-pyridinyl]carbonyl}bicyclo[3.2.1]oct-3-en-2-one, pivalic acid [8-(2,6-diethyl-4-methylphenyl)-1,2,4,5-tetrahydro-7-oxo-7H-pyrazolo[1,2-d][1,4,5]oxadiazepin-9-yl] ester (pinoxaden) and
[N-(5,7-dimethoxy[1,2,4]triazolo[1,5-a]pyrimidin-2-yl)-2-methoxy-4-(trifluoromethyl)-3-pyridinesulfonamide,
including their respective agricultural acceptable salts.

As active compounds C, the compositions according to the invention particularly preferably comprise at least one of the compounds listed below: benoxacor, cloquintocet, dichlormid, fenchlorazole, fenclorim, fluxofenim, furilazole, isoxadifen, mefenpyr, 2,2,5-trimethyl-3-(dichloracetyl)-1,3-oxazolidine, 4-(dichloroacetyl)-1-oxa-4-azaspiro[4.5]decane and oxabetrinil and/or an agriculturally acceptable salt thereof and/or, in the case of compounds having a COOH group, an agriculturally acceptable derivative.

Particular preference is given to those binary and ternary compositions which comprise at least one 3-phenyluracil of the formula I and at least one herbicide B and, if appropriate, one or more safeners C.

Here and below, the term "binary compositions" includes compositions which comprise one or more, for example 2 or 3, active compounds I and one or more, for example 2 or 3, herbicides B. Correspondingly, the term "ternary compositions" includes compositions which comprise one or more, for example 2 or 3, active compounds I, one or more, for example 2 or 3, herbicides B and one or more, for example 2 or 3, safeners C.

In binary compositions the weight ratio of the active compounds I:B is usually in the range from 1:500 to 10:1, preferably in the range from 1:100 to 10:1, in particular in the range from 1:50 to 10:1 and particularly preferably in the range from 1:25 to 5:1.

In ternary compositions which comprise both a 3-phenyluracil I, at least one herbicide B and at least one safener C, the relative weight ratios of the components I:B:C are usually in the range from 10:1:1 to 1:500:10, preferably from 10:1:1 to 1:100:10, in particular from 10:1:1 to 1:50:1 and particularly preferably from 5:1:1 to 1:25:5. In these ternary compositions, the weight ratio of herbicide B to safener C is preferably in the range from 50:1 to 1:10.

In a particular preferred embodiment of the invention, preference is given to those compositions of the invention which comprise a 3-phenyluracil of the formula I, especially of the formula Ia or Ib;
in combination with at least one, especially exacty one herbicide B selected from the group consisting of
aminopyralid and its agriculturally acceptable derivates, 4-hydroxy-3-{[2-methyl-6-(trifluoromethyl)-3-pyridinyl]carbonyl} bicyclo[3.2.1]oct-3-en-2-one,
4-hydroxy-3-{[2-(2-methoxyethoxy)methyl-6-(trifluoromethyl)-3-pyridinyl]carbonyl)bicyclo[3.2.1]oct-3-en-2-one,
4-hydroxy-3-[4-(methylsulfonyl)-2-nitrobenzoyl]bicyclo[3.2.1]-oct-3-en-2-one,
8-(2,6-diethyl-4-methylphenyl)-1,2,4,5-tetrahydro-9-hydroxy-7H-pyrazolo[1,2-d][1,4,5]oxadiazepin-7-one and

pivalic acid [8-(2,6-diethyl-4-methylphenyl)-1,2,4,5-tetrahydro-7-oxo-7H-pyrazolo[1,2-d][1,4,5]oxadiazepin-9-yl] ester (pinoxaden),
including their respective agriculturally acceptable salts, in particular aminopyralid,
4-hydroxy-3-{[2-methyl-6-(trifluoromethyl)-3-pyridinyl]carbonyl}bicyclo[3.2.1]oct-3-en-2-one,
4-hydroxy-3-{[2-(2-methoxyethoxy)methyl-6-(trifluoromethyl)-3-pyridinyl]carbonyl}bicyclo[3.2.1]oct-3-en-2-one,
4-hydroxy-3-[4-(methylsulfonyl)-2-nitrobenzoyl]bicyclo[3.2.1]-oct-3-en-2-one,
8-(2,6-diethyl-4-methylphenyl)-1,2,4,5-tetrahydro-9-hydroxy-7H-pyrazolo[1,2-d][1,4,5]oxadiazepin-7-one and
pivalic acid [8-(2,6-diethyl-4-methylphenyl)-1,2,4,5-tetrahydro-7-oxo-7H-pyrazolo[1,2-d][1,4,5]oxadiazepin-9-yl] ester (pinoxaden); and, if desired,
a safener C, in particular selected from the group consisting fenclorazole, cloquintocet, isoxadifen and mefenpyr.

In another particular preferred embodiment of the invention, preference is given to those compositions of the invention which comprise a 3- phenyluracil of the formula I, especially of the formulae Ia or Ib;
in combination with aminopyralid; and, if desired,
a safener C, in particular selected from the group consisting of fenclorazole, cloquintocet, isoxadifen and mefenpyr.

In another particular preferred embodiment of the invention, preference is given to those compositions of the invention which comprise a 3-phenyluracil of the formula I, especially of formulae Ia or Ib;
in combination with at least one, especially exactly one herbicide B selected from the group consisting of
4-hydroxy-3-{[2-methyl-6-(trifluoromethyl)-3-pyridinyl)carbonyl} bicyclo[3.2.1]oct-3-en-2-one,
4-hydroxy-3-{[2-2-methoxyethoxy)methyl-6-(trifluoromethyl)-3-pyridinyl]carbonyl}bicyclo[3.2.1]oct-3-en-2-one,
4-hydroxy-3-(4-(methylsulfonyl)-2-nitrobenzoyl]bicyclo[3.2.1] oct-3-en-2-one,
in particular 4-hydroxy-3-{(2-(2-methoxyethoxy)methyl-6-(trifluoromethyl)-3-pyridinyl]carbonyl}bicyclo[3.2.1]oct-3-en-2-one; and, if desired,
a safener C, in particular selected from the group consisting of fenclorazole, cloquintocet, isoxadifen and mefenpyr.

In another particular preferred embodiment of the invention, preference is given to those compositions of the invention which comprise a 3-phenyluracil of the formula I, specially of formulae Ia or Ib;
in combination with at least one, especially exactly one herbicide B selected from the group consisting of
8-(2,6-diethyl-4-methylphenyl)-1,2,4,5-tetrahydro-9-hydroxy-7H-pyrazolo[1,2-d][1,4,5]oxadiazepin-7-one,
pivalic acid [8-(2,6-diethyl-4-methylphenyl)-1,2,4,5-tetrahydro-7-oxo-7H-pyrazolo[1,2-d][1,4,5]oxadiazepin-9-yl] ester (pinoxaden),
in particular pivalic acid [8-(2,6-diethyl-4-methylphenyl)-1,2,4,5-tetrahydro-7-oxo-7H-pyrazolo[1,2-d][1,4,5]oxadiazepin-9-yl] ester (pinoxaden); and, if desired,
a safener C, in particular selected from the group consisting of fenclorazole, cloquintocet, isoxadifen and mefenpyr.

In another particular preferred embodiment of the invention, preference is given to those compositions of the invention which comprise a 3-phenyluracil of the formula I, especially of formulae Ia or Ib;
in combination with [N-(5,7-dimethoxy[1,2,4]triazolo[1,5-a]pyrimidin-2-yl)-2-methoxy-4-(trifluromethyl)-3-pyridinesulfonamide; and, if desired,
a safener C, in particular selected from the group consisting of fenclorazole, cloquintocet, isoxadifen and mefenpyr.

In the preferred or especially preferred compositions described above the herbicides B as well as the safeners C can be used in the form of their agriculturally acceptable salts or in the form of an agriculturally acceptable derivative thereof as described above. The weight ratios of the individual components in the compositions are within the limits stated above. Among the especially preferred compositions, particular preference is given to those compositions of the invention in which the variables $R^1$ to $R^7$ have the preferred meanings, especially the particularly preferred meanings. Particular preference is given to 3-phenyluracil of the formula Ia or Ib as defined above.

Preference is given, for example, to those compositions which, as active compound I, comprise the phenyluracil I.1 and, as further active compound, the substances listed in one row of table 2 (compositions 1.1 to 1.43). The weight ratios of the individual components in the compositions 1.1 to 1.43 are within the stated limits, in the case of binary mixtures of phenyluracil I.1 and herbicide B for example 1:1, in the case of binary mixtures of phenyluracil I.1 and safener C for example 1:1 and in the case of ternary mixtures of phenyluracil I.1, herbicide B and safener C for example 1:1:1, 2:1:1, 1:2:1, 1:5:1 or 1:5:2.

Table 2

| Composition No. | Herbicide B | Safener C |
|---|---|---|
| 1.1 | aminopyralid | - |
| 1.2 | aminopyralid | benoxacor |
| 1.3 | aminopyralid | cloquintocet |

(continued)

| Composition No. | Herbicide B | Safener C |
|---|---|---|
| 1.4 | aminopyralid | dichlormid |
| 1.5 | aminopyralid | fenchlorazole |
| 1.6 | aminopyralid | fenclorim |
| 1.7 | aminopyralid | fluxofenim |
| 1.8 | aminopyralid | furilazole |
| 1.9 | aminopyralid | isoxadifen |
| 1.10 | aminopyralid | mefenpyr |
| 1.11 | aminopyralid | 2,2,5-trimethyl-3-(dichlor-acetyl)-1,3-oxazolidine |
| 1.12 | aminopyralid | 4-(dichloroacetyl)-1-oxa-4-aza spiro[4.5] decane |
| 1.13 | aminopyralid | oxabetrinil |
| 1.14 | 4-hydroxy-3-{[2-methyl-6-(trifluoro- methyl)-3-pyridinyl]carbonyl}bicyclo[3.2.1]oct-3-en-2-one | |
| 1.15 | 4-hydroxy-3-{[2-methyl-6-(trifluoromethyl)-3-pyridinyl]carbonyl}bicyclo[3.2.1]oct-3-en-2-one | cloquintocet |
| 1.16 | 4-hydroxy-3-{[2-methyl-6-(trifluoromethyl)-3-pyridinyl]carbonyl}bicyclo [3.2.1]oct-3-en-2-one | fenchlorazole |
| 1.17 | 4-hydroxy-3-{[2-methyl-6-(trifluoromethyl)-3-pyridinyl]carbonyl}bicyclo [3.2.1]oct-3-en-2-one | isoxadifen |
| 1.18 | 4-hydroxy-3-{[2-(2-methoxyethoxy)methyl-6-(trifluoromethyl)-3-pyridinyl]carbonyl} bicyclo[3.2.1]oct-3-en-2-one | mefenpyr |
| 1.19 | 4-hydroxy-3-{[2-(2-methoxyethoxy)methyl-6-(trifluoromethyl)-3-pyridinyl]carbonyl} bicyclo[3.2.1]oct-3-en-2-one | - |
| 1.20 | 4-hydroxy-3-{[2-(2-methoxyethoxy)methyl-6-(trifluoromethyl)-3-pyridinyl]carbonyl} bicyclo[3.2.1]oct-3-en-2-one | cloquintocet |
| 1.21 | 4-hydroxy-3-{[2-(2-methoxyethoxy)methyl-6-(trifluoromethyl)-3-pyridinyl]carbonyl} bicyclo[3.2.1]oct-3-en-2-one | fenchlorazole |
| 1.22 | 4-hydroxy-3-{[2-(2-methoxyethoxy)methyl-6-(trifluoromethyl)-3-pyridinyl]carbonyl} bicyclo[3.2.1]oct-3-en-2-one | isoxadifen |
| 1.23 | 4-hydroxy-3-{[2-(2-methoxyethoxy)methyl-6-(trifluoromethyl)-3-pyridinyl]carbonyl} bicyclo[3.2.1]oct-3-en-2-one | mefenpyr |
| 1.24 | 4-hydroxy-3-[4-(methylsulfonyl)-2-nitrobenzoyl]bicyclo[3.2.1] oct-3-en-2-one | |

(continued)

| Composition No. | Herbicide B | Safener C |
|---|---|---|
| 1.25 | 4-hydrox-y-3-[4-(methylsulfonyl)-2-nitrobenzoyl]bicyclo[3.2.1] oct-3-en-2-one | cloquintocet |
| 1.26 | 4-hydroxy-3-[4-(methylsulfonyl)-2-nitrobenzoyl]bicyclo[3.2.1] oct-3-en-2-one | fenchlorazole |
| 1.27 | 4-hydroxy-3-[4-(methylsulfonyl)-2-nitrobenzoyl]bicyclo[3.2.1] oct-3-en-2-one | isoxadifen |
| 1.28 | 4-hydroxy-3-[4-(methylsulfonyl)-2-nitrobenzoyl]bicyclo[3.2.1] oct-3-en-2-one | mefenpyr |
| 1.29 | 8-(2,6-diethyl-4-methylphenyl)-1,2,4,5-tetrahydro-9-hydroxy-7H-py-razolo[1,2-d][1,4,5]oxadiaze-pin-7-one | - |
| 1.30 | 8-(2,6-diethyl-4-methylphenyl)-1,2,4,5-tetrahydro-9-hydroxy-7H-pyrazolo[1,2-d][1,4,5]oxadiaze-pin-7-one | cloquintocet |
| 1.31 | 8-(2,6-diethyl-4-methylphenyl)-1,2,4,5-tetrahydro-9-hydroxy-7H-pyrazolo[1,2-d][1,4,5]oxadiazepin-7-one | fenchlorazole |
| 1.32 | 8-(2,6-diethyl-4-methylphenyl)-1,2,4,5-tetrahydro-9-hydroxy-7H-pyrazolo[1,2-d][1,4,5]oxadiazepin-7-one | isoxadifen |
| 1.33 | 8-(2,6-diethyl-4-methylphenyl)-1,2,4,5-tetrahydro-9-hydroxy-7H-pyrazolo[1,2-d][1,4,5]oxadiazepin-7-one | mefenpyr |
| 1.34 | pinoxaden | - |
| 1.35 | pinoxaden | cloquintocet |
| 1.36 | pinoxaden | fenchlorazole |
| 1.37 | pinoxaden | isoxadifen |
| 1.38 | pinoxaden | mefenpyr |
| 1.39 | [N-(5,7-dimethoxy[1,2,4]triazolo [1,5-a] pyrimidin-2-yl)-2-methoxy-4-(trifluoromethyl)-3-pyridine-sulfonamide | - |
| 1.40 | [N-(5,7-dimethoxy[1,2,4]triazolo [1,5-a] pyrimidin-2-yl)-2-methoxy-4-(trifluoromethyl)-3-pyridine-sulfonamide | cloquintocet |
| 1.41 | [N-(5,7-dimethoxy[1,2,4]triazolo [1,5-a] pyrimidin-2-yl)-2-methoxy-4-(trifluoromethyl)-3-pyridine-sulfonamide | fenchlorazole |
| 1.42 | [N-(5,7-dimethoxy[1,2,4]triazolo [1,5-a] pyrimidin-2-yl)-2-methoxy-4-(trifluoromethyl)-3-pyridine-sulfonamide | isoxadifen |
| 1.43 | (N-(5,7-dimethoxy[1,2,4]triazolo [1,5-a] pyrimidin-2-yl)-2-methoxy-4-(trifluoromethyl)-3-pyridine-sulfonamide | mefenpyr |

If the active compounds mentioned in table 2 have functional groups which can be ionized, they can, of course, also be present in the form of their agriculturally acceptable salts. In the case of acidic active compounds, i.e. active

compounds which can be deprotonated, these are in particular the lithium, sodium, potassium, calcium, magnesium, ammonium, methylammonium, isopropylammonium, dimethylammonium, diisopropylammonium, trimethylammonium, tetramethylammonium, tetraethylammonium, tetrabutylammonium, 2-hydroxyethylammonium, 2-(2-hydroxyethoxy)eth-1-ylammonium, di-(2-hydroxyeth-1-yl)ammonium, benzyltrimethylammonium, benzyltriethylammonium or trimethylsulfonium salts. In the case of basic active compounds, i.e. active compounds which can be protonated, these are in particular the chlorides, bromides, sulfates, hydrogen sulfates, methylsulfates, dihydrogen phosphates or hydrogen phosphates of the active compounds mentioned above. If the active compounds mentioned in table 2 have a carboxyl group they can, of course, also be present in the form of agriculturally acceptable derivatives, in particular in the form of their methyl-and dimethylamides, in the form of their anilides or 2-chloroanilides, and also in the form of their methyl, ethyl, propyl, isopropyl, butyl, isobutyl, pentyl, hexyl, isooctyl, methoxyethyl, ethoxyethyl, butoxyethyl or thioethyl esters.

Preference is also given to the compositions 2.1 - 2.43 which differ from the corresponding compositions 1.1 - 1.43 only in that the phenyluracil I.1 is replaced by the phenyluracil I.2.

Preference is also given to the compositions 3.1 - 3.43 which differ from the corresponding compositions 1.1 - 1.43 only in that the phenyluracil I.1 is replaced by the phenyluracil I.3.

Preference is also given to the compositions 4.1 - 4.43 which differ from the corresponding compositions 1.1 - 1.43 only in that the phenyluracil I.1 is replaced by the phenyluracil I.4.

Preference is also given to the compositions 5.1 - 5.43 which differ from the corresponding compositions 1.1 - 1.43 only in that the phenyluracil I.1 is replaced by the phenyluracil I.5.

Preference is also given to the compositions 6.1 - 6.43 which differ from the corresponding compositions 1.1 - 1.43 only in that the phenyluracil I.1 is replaced by the phenyluracil I.6.

Preference is also given to the compositions 7.1 - 7.43 which differ from the corresponding compositions 1.1 - 1.43 only in that the phenyluracil I.1 is replaced by the phenyluracil I.7.

Preference is also given to the compositions 8.1 - 8.43 which differ from the corresponding compositions 1.1 - 1.43 only in that the phenyluracil I.1 is replaced by the phenyluracil I.8.

Preference is also given to the compositions 9.1 - 9.43 which differ from the corresponding compositions 1.1 - 1.43 only in that the phenyluracil I.1 is replaced by the phenyluracil I.9.

Preference is also given to the compositions 10.1 - 10.43 which differ from the corresponding compositions 1.1 - 1.43 only in that the phenyluracil I.1 is replaced by the phenyluracil I.10.

Preference is also given to the compositions 11.1 - 11.43 which differ from the corresponding compositions 1.1 - 1.43 only in that the phenyluracil I.1 is replaced by the phenyluracil I.11.

Preference is also given to the compositions 12.1 - 12.43 which differ from the corresponding compositions 1.1 - 1.43 only in that the phenyluracil I.1 is replaced by the phenyluracil I.12.

Preference is also given to the compositions 13.1 - 13.43 which differ from the corresponding compositions 1.1 - 1.43 only in that the phenyluracil I.1 is replaced by the phenyluracil I.13.

Preference is also given to the compositions 14.1 - 14.43 which differ from the corresponding compositions 1.1 - 1.43 only in that the phenyluracil I.1 is replaced by the phenyluracil I.14.

Preference is also given to the compositions 15.1 - 15.43 which differ from the corresponding compositions 1.1 - 1.43 only in that the phenyluracil I.1 is replaced by the phenyluracil I.15.

Preference is also given to the compositions 16.1 - 16.43 which differ from the corresponding compositions 1.1 - 1.43 only in that the phenyluracil I.1 is replaced by the phenyluracil I.16.

Preference is also given to the compositions 17.1 - 17.43 which differ from the corresponding compositions 1.1 - 1.43 only in that the phenyluracil I.1 is replaced by the phenyluracil I.17.

Preference is also given to the compositions 18.1 - 18.43 which differ from the corresponding compositions 1.1 - 1.43 only in that the phenyluracil I.1 is replaced by the phenyluracil I.18.

Preference is also given to the compositions 19.1 - 19.43 which differ from the corresponding compositions 1.1 - 1.43 only in that the phenyluracil I.1 is replaced by the phenyluracil I.19.

Preference is also given to the compositions 20.1 - 20.43 which differ from the corresponding compositions 1.1 - 1.43 only in that the phenyluracil I.1 is replaced by the phenyluracil I.20.

Preference is also given to the compositions 21.1 - 21.43 which differ from the corresponding compositions 1.1 - 1.43 only in that the phenyluracil I.1 is replaced by the phenyluracil I.21.

Preference is also given to the compositions 22.1 - 22.43 which differ from the corresponding compositions 1.1 - 1.43 only in that the phenyluracil I.1 is replaced by the phenyluracil I.22.

Preference is also given to the compositions 23.1 - 23.43 which differ from the corresponding compositions 1.1 - 1.43 only in that the phenyluracil I.1 is replaced by the phenyluracil I.23.

Preference is also given to the compositions 24.1 - 24.43 which differ from the corresponding compositions 1.1 - 1.43 only in that the phenyluracil I.1 is replaced by the phenyluracil I.24.

Preference is also given to the compositions 25.1 - 25.43 which differ from the corresponding compositions 1.1 - 1.43 only in that the phenyluracil I.1 is replaced by the phenyluracil I.25.

Preference is also given to the compositions 26.1 - 26.43 which differ from the corresponding compositions 1.1 - 1.43 only in that the phenyluracil I.1 is replaced by the phenyluracil I.26.

Preference is also given to the compositions 27.1 - 27.43 which differ from the corresponding compositions 1.1 - 1.43 only in that the phenyluracil I.1 is replaced by the phenyluracil I.27.

Preference is also given to the compositions 28.1 - 28.43 which differ from the corresponding compositions 1.1 - 1.43 only in that the phenyluracil I.1 is replaced by the phenyluracil I.28.

Preference is also given to the compositions 29.1 - 29.43 which differ from the corresponding compositions 1.1 - 1.43 only in that the phenyluracil I.1 is replaced by the phenyluracil I.29.

Preference is also given to the compositions 30.1 - 30.43 which differ from the corresponding compositions 1.1 - 1.43 only in that the phenyluracil I.1 is replaced by the phenyluracil I.30.

Preference is also given to the compositions 31.1 - 31.43 which differ from the corresponding compositions 1.1 - 1.43 only in that the phenyluracil I.1 is replaced by the phenyluracil I.31.

Preference is also given to the compositions 32.1 - 32.43 which differ from the corresponding compositions 1.1 - 1.43 only in that the phenyluracil I.1 is replaced by the phenyluracil I.32.

Preference is also given to the compositions 33.1 - 33.43 which differ from the corresponding compositions 1.1 - 1.43 only in that the phenyluracil I.1 is replaced by the phenyluracil I.33.

Preference is also given to the compositions 34.1 - 34.43 which differ from the corresponding compositions 1.1 - 1.43 only in that the phenyluracil I.1 is replaced by the phenyluracil I.34.

Preference is also given to the compositions 35.1 - 35.43 which differ from the corresponding compositions 1.1 - 1.43 only in that the phenyluracil I.1 is replaced by the phenyluracil I.35.

Preference is also given to the compositions 36.1 - 36.43 which differ from the corresponding compositions 1.1 - 1.43 only in that the phenyluracil I.1 is replaced by the phenyluracil I.36.

Preference is also given to the compositions 37.1 - 37.43 which differ from the corresponding compositions 1.1 - 1.43 only in that the phenyluracil I.1 is replaced by the phenyluracil I.37.

Preference is also given to the compositions 38.1 - 38.43 which differ from the corresponding compositions 1.1 - 1.43 only in that the phenyluracil I.1 is replaced by the phenyluracil I.38.

Preference is also given to the compositions 39.1 - 39.43 which differ from the corresponding compositions 1.1 - 1.43 only in that the phenyluracil I.1 is replaced by the phenyluracil I.39.

Preference is also given to the compositions 40.1 - 40.43 which differ from the corresponding compositions 1.1 - 1.43 only in that the phenyluracil I.1 is replaced by the phenyluracil I.40.

Preference is also given to the compositions 41.1 - 41.43 which differ from the corresponding compositions 1.1 - 1.43 only in that the phenyluracil I.1 is replaced by the phenyluracil I.41.

Preference is also given to the compositions 42.1 - 42.43 which differ from the corresponding compositions 1.1 - 1.43 only in that the phenyluracil I.1 is replaced by the phenyluracil I.42.

Preference is also given to the compositions 43.1 - 43.43 which differ from the corresponding compositions 1.1 - 1.43 only in that the phenyluracil I.1 is replaced by the phenyluracil I.43.

Preference is also given to the compositions 44.1 - 44.43 which differ from the corresponding compositions 1.1 - 1.43 only in that the phenyluracil I.1 is replaced by the phenyluracil I.44.

Preference is also given to the compositions 45.1 - 45.43 which differ from the corresponding compositions 1.1 - 1.43 only in that the phenyluracil I.1 is replaced by the phenyluracil I.45.

Preference is also given to the compositions 46.1 - 46.43 which differ from the corresponding compositions 1.1 - 1.43 only in that the phenyluracil I.1 is replaced by the phenyluracil I.46.

Preference is also given to the compositions 47.1 - 47.43 which differ from the corresponding compositions 1.1 - 1.43 only in that the phenyluracil I.1 is replaced by the phenyluracil I.47.

Preference is also given to the compositions 48.1 - 48.43 which differ from the corresponding compositions 1.1 - 1.43 only in that the phenyluracil I.1 is replaced by the phenyluracil I.48.

Preference is also given to the compositions 49.1 - 49.43 which differ from the corresponding compositions 1.1 - 1.43 only in that the phenyluracil I.1 is replaced by the phenyluracil I.49.

Preference is also given to the compositions 50.1 - 50.43 which differ from the corresponding compositions 1.1 - 1.43 only in that the phenyluracil I.1 is replaced by the phenyluracil I.50.

Preference is also given to the compositions 51.1 - 51.43 which differ from the corresponding compositions 1.1 - 1.43 only in that the phenyluracil I.1 is replaced by the phenyluracil I.51.

Preference is also given to the compositions 52.1 - 52.43 which differ from the corresponding compositions 1.1 - 1.43 only in that the phenyluracil I.1 is replaced by the phenyluracil I.52.

Preference is also given to the compositions 53.1 - 53.43 which differ from the corresponding compositions 1.1 - 1.43 only in that the phenyluracil I.1 is replaced by the phenyluracil I.53.

Preference is also given to the compositions 54.1 - 54.43 which differ from the corresponding compositions 1.1 - 1.43 only in that the phenyluracil I.1 is replaced by the phenyluracil I.54.

Preference is also given to the compositions 55.1 - 55.43 which differ from the corresponding compositions 1.1 - 1.43 only in that the phenyluracil I.1 is replaced by the phenyluracil I.55.

Preference is also given to the compositions 56.1 - 56.43 which differ from the corresponding compositions 1.1 - 1.43 only in that the phenyluracil I.1 is replaced by the phenyluracil I.56.

Preference is also given to the compositions 57.1 - 57.43 which differ from the corresponding compositions 1.1 - 1.43 only in that the phenyluracil I.1 is replaced by the phenyluracil I.57.

Preference is also given to the compositions 58.1 - 58.43 which differ from the corresponding compositions 1.1 - 1.43 only in that the phenyluracil I.1 is replaced by the phenyluracil I.58.

Preference is also given to the compositions 59.1 - 59.43 which differ from the corresponding compositions 1.1 - 1.43 only in that the phenyluracil I.1 is replaced by the phenyluracil I.59.

Preference is also given to the compositions 60.1 - 60.43 which differ from the corresponding compositions 1.1 - 1.43 only in that the phenyluracil I.1 is replaced by the phenyluracil I.60.

Preference is also given to the compositions 61.1 - 61.43 which differ from the corresponding compositions 1.1 - 1.43 only in that the phenyluracil I.1 is replaced by the phenyluracil I.61.

Preference is also given to the compositions 62.1 - 62.43 which differ from the corresponding compositions 1.1 - 1.43 only in that the phenyluracil I.1 is replaced by the phenyluracil I.62.

Preference is also given to the compositions 63.1 - 63.43 which differ from the corresponding compositions 1.1 - 1.43 only in that the phenyluracil I.1 is replaced by the phenyluracil I.63.

Preference is also given to the compositions 64.1 - 64.43 which differ from the corresponding compositions 1.1 - 1.43 only in that the phenyluracil I.1 is replaced by the phenyluracil I.64.

Preference is also given to the compositions 65.1 - 65.43 which differ from the corresponding compositions 1.1 - 1.43 only in that the phenyluracil I.1 is replaced by the phenyluracil I.65.

Preference is also given to the compositions 66.1 - 66.43 which differ from the corresponding compositions 1.1 - 1.43 only in that the phenyluracil I.1 is replaced by the phenyluracil I.66.

Preference is also given to the compositions 67.1 - 67.43 which differ from the corresponding compositions 1.1 - 1.43 only in that the phenyluracil I.1 is replaced by the phenyluracil I.67.

Preference is also given to the compositions 68.1 - 68.43 which differ from the corresponding compositions 1.1 - 1.43 only in that the phenyluracil I.1 is replaced by the phenyluracil I.68.

Preference is also given to the compositions 69.1 - 69.43 which differ from the corresponding compositions 1.1 - 1.43 only in that the phenyluracil I.1 is replaced by the phenyluracil I.69.

Preference is also given to the compositions 70.1 - 70.43 which differ from the corresponding compositions 1.1 - 1.43 only in that the phenyluracil I.1 is replaced by the phenyluracil I.70.

Preference is also given to the compositions 71.1 - 71.43 which differ from the corresponding compositions 1.1 - 1.43 only in that the phenyluracil I.1 is replaced by the phenyluracil I.71.

Preference is also given to the compositions 72.1 - 72.43 which differ from the corresponding compositions 1.1 - 1.43 only in that the phenyluracil I.1 is replaced by the phenyluracil I.72.

Preference is also given to the compositions 73.1 - 73.43 which differ from the corresponding compositions 1.1 - 1.43 only in that the phenyluracil I.1 is replaced by the phenyluracil I.73.

Preference is also given to the compositions 74.1 - 74.43 which differ from the corresponding compositions 1.1 - 1.43 only in that the phenyluracil I.1 is replaced by the phenyluracil I.74.

The weight ratios of the individual components in the compositions 2.1 to 74.43 are within the limits stated above, in the case of binary mixtures of phenyluracil I.1 and herbicide B for example 1:1, 1:2 or 1:5, in the case of binary mixtures of phenyluracil I.1 and safener C for example 1:1, 1:2 or 1:5 and in the case of ternary mixtures of phenyluracil I.1, herbicide B and safener C for example 1:1:1, 2:1:1, 1:2:1, 1:5:1 or 1:5:2.

In the ready-to-use preparations, i.e. in the compositions according to the invention in the form of crop protection products, the components I and B and optionally C, in suspended, emulsified or dissolved form, can be present formulated jointly or separately. The use forms depend entirely on the intended use.

The compositions according to the invention can be applied, for example, in the form of directly sprayable aqueous solutions, powders, suspensions, also highly-concentrated aqueous, oily or other suspensions or dispersions, emulsions, oil dispersions, pastes, dusts, materials for spreading or granules, by means of spraying, atomizing, dusting, broadcasting or watering. The use forms depend on the intended use; in any case, they should ensure the finest possible distribution of the active compounds.

Depending on the form in which the ready-to-use preparations are present in the compositions according to the invention, they comprise one or more liquid or solid carriers, if appropriate surfactants and if appropriate further auxiliaries which are customary for formulating crop protection products. The person skilled in the art is sufficiently familiar with the recipes for such formulations.

The ready-to-use preparations comprise the components I and B and optionally C and auxiliaries which are customary for formulating crop protection products, which auxiliaries may also comprise a liquid carrier.

Suitable inert additives with carrier function are essentially: mineral oil fractions of medium to high boiling point, such as kerosene and diesel oil, furthermore coal tar oils and oils of vegetable or animal origin, aliphatic, cyclic and aromatic hydrocarbons, e.g. paraffins, tetrahydronaphthalene, alkylated naphthalenes and their derivatives, alkylated benzenes and their derivatives, alcohols such as methanol, ethanol, propanol, butanol and cyclohexanol, ketones such as cyclohexanone, strongly polar solvents, e.g. amines such as N-methylpyrrolidone, and water.

Aqueous use forms can be prepared from emulsion concentrates, suspensions, pastes, wettable powders or water-dispersible granules by adding water. To prepare emulsions, pastes or oil dispersions, the active compounds I, B or C, as such or dissolved in an oil or solvent, can be homogenized in water by means of wetting agent, tackifier, dispersant or emulsifier. Alternatively, it is possible to prepare concentrates consisting of active substance, wetting agent, tackifier, dispersant or emulsifier and, if desired, solvent or oil, and these concentrates are suitable for dilution with water.

Suitable surfactants are the alkali metal salts, alkaline earth metal salts and ammonium salts of aromatic sulfonic acids, e.g. ligno-, phenol-, naphthalene- and dibutylnaphthalenesulfonic acid, and of fatty acids, of alkyl- and alkylarylsulfonates, of alkyl sulfates, lauryl ether sulfates and fatty alcohol sulfates, and salts of sulfated hexa-, hepta- and octadecanols and of fatty alcohol glycol ethers, condensates of sulfonated naphthalene and its derivatives with formaldehyde, condensates of naphthalene or of the naphthalenesulfonic acids with phenol and formaldehyde, polyoxyethylene octylphenol ether, ethoxylated isooctyl-, octyl-or nonylphenol, alkylphenyl polyglycol ethers, tributylphenyl polyglycol ether, alkylaryl polyether alcohols, isotridecyl alcohol, fatty alcohol/ethylene oxide condensates, ethoxylated castor oil, polyoxyethylene alkyl ether or polyoxypropylene alkyl ether, lauryl alcohol polyglycol ether acetate, sorbitol esters, lignosulfite waste liquors or methylcellulose.

Powders, materials for spreading and dusts can be prepared by mixing or concomitant grinding of the active substances with a solid carrier.

Granules, e.g. coated granules, impregnated granules and homogeneous granules, can be prepared by binding the active ingredients to solid carriers. Solid carriers are mineral earths such as silicas, silica gels, silicates, talc, kaolin, limestone, lime, chalk, bole, loess, clay, dolomite, diatomaceous earth, calcium sulfate, magnesium sulfate, magnesium oxide, ground synthetic materials, fertilizers such as ammonium sulfate, ammonium phosphate, ammonium nitrate, ureas, and products of vegetable origin such as cereal meal, tree bark meal, wood meal and nutshell meal, cellulose powders, or other solid carriers.

The concentrations of the active compounds in the ready-to-use preparations can be varied within wide ranges. In general, the formulations comprise from 0.001 to 98% by weight, preferably 0.01 to 95% by weight, of active ingredients. The active ingredients are employed in a purity of from 90% to 100%, preferably 95% to 100% (according to NMR spectrum).

The compounds according to the invention can, for example, be formulated as follows:

I 20 parts by weight of the active compound or active compound mixture in question are dissolved in a mixture composed of 80 parts by weight of alkylated benzene, 10 parts by weight of the adduct of 8 to 10 mol of ethylene oxide to 1 mol of oleic acid N-monoethanolamide, 5 parts by weight of calcium dodecylbenzenesulfonate and 5 parts by weight of the adduct of 40 mol of ethylene oxide to 1 mol of castor oil. Pouring the solution into 100 000 parts by weight of water and finely distributing it therein gives an aqueous dispersion which comprises 0.02% by weight of the active ingredient.

II 20 parts by weight of the active compound or active compound mixture in question are dissolved in a mixture composed of 40 parts by weight of cyclohexanone, 30 parts by weight of isobutanol, 20 parts by weight of the adduct of 7 mol of ethylene oxide to 1 mol of isooctylphenol and 10 parts by weight of the adduct of 40 mol of ethylene oxide to 1 mol of castor oil. Pouring the solution into 100 000 parts by weight of water and finely distributing it therein gives an aqueous dispersion which comprises 0.02% by weight of the active ingredient.

III 20 parts by weight of the active compound or active compound mixture in question are dissolved in a mixture composed of 25 parts by weight of cyclohexanone, 65 parts by weight of a mineral oil fraction of boiling point 210 to 280°C and 10 parts by weight of the adduct of 40 mol of ethylene oxide to 1 mol of castor oil. Pouring the solution into 100 000 parts by weight of water and finely distributing it therein gives an aqueous dispersion which comprises 0.02% by weight of the active ingredient.

IV 20 parts by weight of the active compound or active compound mixture in question are mixed thoroughly with 3 parts by weight of sodium diisobutylnaphthalenesulfonate, 17 parts by weight of the sodium salt of a lignosulfonic acid from a sulfite waste liquor and 60 parts by weight of pulverulent silica gel, and the mixture is ground in a hammer mill. Finely distributing the mixture in 20 000 parts by weight of water gives a spray mixture which comprises 0.1% by weight of the active ingredient.

V 3 parts by weight of the active compound or active compound mixture in question are mixed with 97 parts by weight of finely divided kaolin. This gives a dust which comprises 3% by weight of the active ingredient.

VI 20 parts by weight of the active compound or active compound mixture in question are mixed intimately with 2 parts by weight of calcium dodecylbenzenesulfonate, 8 parts by weight of fatty alcohol polyglycol ether, 2 parts by weight of the sodium salt of a phenol-urea-formaldehyde condensate and 68 parts by weight of a paraffinic mineral oil. This gives a stable oily dispersion.

VII 1 part by weight of the active compound or active compound mixture in question is dissolved in a mixture composed of 70 parts by weight of cyclohexanone, 20 parts by weight of ethoxylated isooctylphenol and 10 parts by weight of ethoxylated castor oil. This gives a stable emulsion concentrate.

VIII1 part by weight of the active compound or active compound mixture in question is dissolved in a mixture composed of 80 parts by weight of cyclohexanone and 20 parts by weight of Wettol® EM 31 (nonionic emulsifier based on ethoxylated castor oil). This gives a stable emulsion concentrate.

The components I and B and optionally C can be formulated jointly or separately.

The components I and B and optionally C can be applied jointly or separately, simultaneously or successively, before, during or after emergence of the plants.

If the active compounds I and B and optionally C are less well tolerated by certain crop plants, it is possible to use application methods in which the herbicidal compositions are sprayed with the aid of sprayers in such a way that the leaves of the sensitive crop plants are as far as possible unaffected, whereas the active compounds reach the leaves of the undesirable plants growing underneath or the uncovered soil surface (post-directed, lay-by).

The required application rate of the composition of the pure active compounds, i.e. of I and B and optionally C without formulation auxiliary, depends on the density of the undesired vegetation, on the development stage of the plants, on the climatic conditions of the location where the composition is used and on the application method. In general, the application rate of I and B and optionally C is from 0.001 to 3 kg/ha, preferably from 0.005 to 2 kg/ha and in particular from 0.01 to 1 kg/ha of active substance.

The required application rates of the 3-phenyluracils I are generally in the range from 0.1 g/ha to 1 kg/ha and preferably in the range from 1 g/ha to 500 g/ha or from 5 g/ha to 500 g/ha of active substance.

The compositions are applied to the plants mainly by foliar spraying. Application can be carried out by customary spraying techniques using, for example, water as carrier and spray liquor rates of from about 100 to 1 000 1/ha (for example from 300 to 400 1/ha). Application of the herbicidal compositions by the low-volume and the ultra-low-volume method is possible, as is their application in the form of microgranules.

The compositions according to the present invention are suitable for controlling common harmful plants in useful plants, in particular in crops such as wheat, barley, oats, corn, soybean, sorghum, rice, oilseed rape, cotton, potatoes, dry beans, groundnuts or in perennial crops. In another embodiment of the invention, they are useful for controlling the whole vegetation, i. e. they act as a total weedkiller. Futhermore, in another emodiment of the present invention, the compositions are useful for controlling undesirable vegetation in forestry.

Moreover, it may be useful to apply the compositions according to the invention jointly as a mixture with other crop protection products, for example with pesticides or agents for controlling phytopathogenic fungi or bacteria. Also of interest is the miscibility with mineral salt solutions which are employed for treating nutritional and trace element deficiencies. Non-phytotoxic oils and oil concentrates may also be added.

The compositions according to the invention can also be used in crop plants which are resistant to one or more herbicides owing to genetic engineering or breeding or which are resistant to attack by insects owing to genetic engineering or breeding. Suitable are for example crop plants preferably corn, wheat, barley, sunflower, rice, canola, soybeans which are resistant to herbicidal EPSP synthase inhibitors, such as, for example, glyphosate, to herbicidal glutamine synthase inhibitors, such as, for example, glufosinate, to herbicidal protoporphyrinogen-IX oxidase inhibitors, such as, for example, butafenacil, or to herbicidal ALS inhibitors, such as, for example, imazamethabenz, imazamox, imazapic, imazapyr, imazaquin, imazethapyr, or crop plants which, owing to introduction of the gene for Bt toxin by genetic modification, are resistant to attack by certain insects.

Surprisingly, the compositions according to the invention which comprise at least one phenyluracil of the formula I and at least one herbicide B have better herbicidal activity against harmful plants than would have been expected by the herbicidal activity of the individual compounds. In other words, the joint action of phenyluracil I and herbicide B results in an enhanced activity against harmful plants in the sense of a synergy effect (synergism). For this reason, the mixtures can, based on the individual components, be used at lower application rates to achieve a herbicidal effect comparable to the individual components.

Surprisingly, the compositions according to the invention which, in addition to the phenyluracil I and the herbicide

B comprise an active compound from group C are better tolerated by useful plants than the respective mixture of 3-phenyluracil I + herbicide B without active compound of group C.

The 3-phenyluracils of the formula I can be prepared by the preparation processes disclosed by the earlier application WO 2001/83459. With respect to the preparation of individual compounds, reference is made to the examples of WO 2001/83459. Compounds which are not explicitly disclosed in this document can be prepared in an analogous manner.

Use Examples

The effect of the herbicidal mixtures according to the invention of components I and B and, if appropriate, C on the growth of undesirable plants compared to the herbicidally active compounds alone was demonstrated by the following greenhouse experiments

For the post-emergence treatment, the test plants were first grown to a height of 3 to 20 cm, depending on the plant habit, and only then treated. Here, the herbicidal compositions were suspended or emulsified in water as distribution medium and sprayed using finely distributing nozzles.

The respective components I and B and/or C were formulated as 10% by weight strength emulsion concentrate and introduced to the spray liquor with the amount of solvent system used for applying the active compound. In the examples, the solvent used was water.

The test period extended over 21 days. During this time, the plants were tended, and their response to the treatments with active compound was evaluated.

The evaluation for the damage caused by the chemical compositions was carried out using a scale from 0 to 100%, compared to the untreated control plants. Here, 0 means no damage and 100 means complete destruction of the plants.

In the examples below, the value E which is to be expected if the activity of the individual compounds is just additive was calculated using the method of S. R. Colby (1967) "Calculating synergistic and antagonistic responses of herbicide combinations", Weeds 15, p. 22 ff.

$$E = X + Y - (X \cdot Y/100)$$

where

X = effect in percent using active compound I at an application rate a;

Y = effect in percent using active compound B at an application rate b;

E = expected effect (in %) of I + B at application rates a + b.

If the value calculated in this manner is higher than the value E calculated according to Colby, a synergistic effect is present.

The following active compounds were tested:

Phenyluracil I.1 from table 1 (example 54 from WO 2001/83459);
4-Hydroxy-3-{[2-methyl-6-(triflurmethyl)-3-pyridinyl]carbonyl}cicyclo[3.2.1]oct-3-en-2-one (herbicide B.1);
4-Hydroxy-3-{[2-methoxyethoxy)methyl-6-(trifluormethyl)-3-pyridinyl]carbonyl}bicyclo[3.2.1]oct-3-en-2-one (herbicide B.2).

The plants used in these greenhouse experiments belong to the following species:

| Scientific name | Common name |
|---|---|
| Alopecurus myosuroides | Blackgross |
| Amaranthus retroflexus | Common amaranth |
| Echinocloa crus-galli | Cockspur |

Example 1: Herbicidal activity of mixture 1.14 applied by the pre-emergence method

| Application rate [g/ha] | | Herbicidal activity against Amaranthus retroflexus | |
|---|---|---|---|
| I.1 | B.1 | found | calculated |
| 0.98 | - | 0 | - |
| - | 0.98 | 0 | - |
| 0.98 | 0.98 | 25 | 0 |
| 1.95 | - | 0 | - |
| - | 1.95 | 20 | - |
| 1.95 | 1.95 | 50 | 20 |

Example 2: Herbicidal activity of mixture 1.14 applied by the post-emergence method

| Application rate [g/ha] | | Herbicidal activity against Echinocloa crus-galli | |
|---|---|---|---|
| I.1 | B.1 | found | calculated |
| 0.98 | - | 0 | - |
| - | 0.98 | 30 | - |
| 0.98 | 0.98 | 70 | 30 |
| 1.95 | - | 0 | - |
| - | 1.95 | 60 | - |
| 1.95 | 1.95 | 80 | 60 |

Example 3: Herbicidal activity of mixture 1.19 applied by the post-emergence method

| Application rate [g/ha] | | Herbicidal activity against Alopecurus myosuroides | |
|---|---|---|---|
| I.1 | B.2 | found | calculated |
| 1.95 | - | 0 | - |
| - | 1.95 | 0 | - |
| 1.95 | 1.95 | 10 | 0 |
| 3.91 | - | 0 | - |
| - | 3.91 | 0 | - |
| 3.91 | 3.91 | 15 | 0 |

The data according to examples 1 to 3 prove unambiguously the synergistic effect of the herbicidal mixtures according to the invention.

## Claims

1. A herbicidal active composition comprising 3-Phenyluracils of the formula I

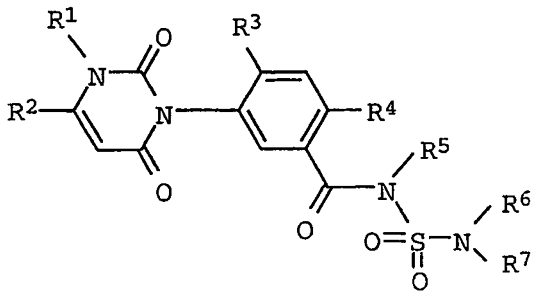

(I)

in which the variables $R^1$ - $R^7$ are as defined below:

$R^1$ is methyl or $NH_2$;
$R^2$ is $C_1$-$C_2$-haloalkyl;
$R^3$ is hydrogen or halogen;
$R^4$ is halogen or cyano;
$R^5$ is hydrogen, cyano, $C_1$-$C_6$-alkyl, $C_1$-$C_6$-alkoxy, $C_1$-$C_4$-alkoxy-$C_1$-$C_4$-alkyl, $C_3$-$C_7$-cycloalkyl, $C_3$-$C_6$-alkenyl, $C_3$-$C_6$-alkynyl or benzyl which is unsubstituted or substituted by halogen or $C_1$-$C_6$-alkyl;
$R^6$, $R^7$ independently of one another are hydrogen, $C_1$-$C_6$-alkyl, $C_1$-$C_6$-alkoxy, $C_3$-$C_6$-alkenyl, $C_3$-$C_6$-alkynyl, $C_3$-$C_7$-cycloalkyl, $C_3$-$C_7$-cycloalkenyl, phenyl or benzyl, where each of the 8 abovementioned substituents is unsubstituted or substituted by 1 to 6 halogen atoms and/or by one, two or three groups selected from: OH, $NH_2$, CN, $CONH_2$, $C_1$-$C_4$-alkoxy, $C_1$-$C_4$-haloalkoxy, $C_1$-$C_4$-alkylthio, $C_1$-$C_4$-haloalkylthio, $C_1$-$C_4$-alkylsulfonyl, $C_1$-$C_4$-haloalkylsulfonyl, $C_1$-$C_4$-alkylamino, di($C_1$-$C_4$-alkyl)amino, formyl, $C_1$-$C_4$-alkylcarbonyl, $C_1$-$C_4$-alkoxycarbonyl, $C_1$-$C_4$-alkylaminocarbonyl, di($C_1$-$C_4$-alkyl)amino-carbonyl, $C_3$-$C_7$-cycloalkyl, phenyl and benzyl; or
$R^6$, $R^7$ together with the nitrogen atom to which they are attached form a 3-, 4-, 5-, 6- or 7-membered saturated or unsaturated nitrogen heterocycle which may be substituted by 1 to 6 methyl groups and which may contain 1 or 2 further heteroatoms selected from the group consisting of nitrogen, oxygen and sulfur as ring members,

including their agriculturally acceptable salts;
and
at least one further herbicide B, selected from the group consisting of
aminopyralid and its agriculturally acceptable derivatives,
4-hydroxy-3-{[2-methyl-6-(trifluoromethyl)-3-pyridinyl]carbonyl}bicyclo[3.2.1]oct-3-en-2-one,
4-hydroxy-3-{[2-(2-methoxyethoxy)methyl-6-(trifluoromethyl)-3-pyridinyl]carbonyl}bicyclo[3.2.1]oct-3-en-2-one,
4-hydroxy-3-[4-(methylsulfonyl)-2-nitrobenzoyl]bicyclo[3.2.1] oct-3-en-2-one,
8-(2,6-diethyl-4-methylphenyl)-1,2,4,5-tetrahydro-9-hydroxy-7H-pyrazolo[1,2-d][1,4,5]oxadiazepin-7-one, pivalic acid [8-(2,6-diethyl-4-methylphenyl)-1,2,4,5-tetrahydro-7-oxo-7H-pyrazolo[1,2-d][1,4,5]oxadiazepin-9-yl] ester (pinoxaden) and
[N-(5,7-dimethoxy[1,2,4]triazolo[1,5-a]pyrimidin-2-yl)-2-methoxy-4-(trifluoromethyl)-3-pyridinesulfonamide,
including their respective agriculturally acceptable salts;
and optionally
at least one safener C, selected from the group consisting of benoxacor, cloquintocet, cyometrinil, dichlormid, dicyclonon, dietholate, fenchlorazole, fenclorim, flurazole, fuxofenim, flurilazole, isoxadifen, mefenpyr, mephenate, naphthalic anhydride, 2,2,5-trimethyl-3-(dichloracetyl-1,3-oxazolidine (R-29148), 4-(dichloroacetyl)-1-oxa-4-azaspiro[4,5]decane (AD-67, MON 4660) and oxabetrinil,
including their agriculturally acceptable salts and, provided they have a carboxyl group, of their agriculturally acceptable derivatives.

**2.** A herbicidal active composition as claimed in claim 1, in which the herbicides B are selected from the group consisting of
aminopyralid and its agriculturally acceptable derivates, 4-hydroxy-3-{[2-methyl-6-(trifluoromethyl)-3-pyridinyl] carbonyl}bicyclo[3.2.1]oct-3-en-2-one, 4-hydroxy-3-{[2-(2-methoxyethoxy)methyl-6-(trifluoromethyl)-3-pyridinyl] carbonyl}bicyclo[3.2.1]oct-3-en-2-one,
4-hydroxy-3-[4-(methylsulfonyl)-2-nitrobenzoyl]bicyclo[3.2.1]-oct-3-en-2-one,
8-(2,6-diethyl-4-methylphenyl)-1,2,4,5-tetrahydro-9-hydroxy-7H-pyrazolo[1,2-d][1,4,5]oxadiazepin-7-one and
pivalic acid [8-(2,6-diethyl-4-methylphenyl)-1,2,4,5-tetrahydro-7-oxo-7H-pyrazolo[1,2-d][1,4,5]oxadiazepin-9-yl] ester (pinoxaden),
including their respective agriculturally acceptable salts.

3. A herbicidal active composition as claimed in claim 1 or 2, in which the herbicides B are selected from the group consisting of
aminopyralid and its agriculturally acceptable derivatives,
4-hydroxy-3-{[2-(2-methoxyethoxy)methyl-6-(trifluormethyl)-3-pyridinyl]carbonyl}bicyclo[3.2.1]oct-3-en-2-one,
pivalic acid [8-(2,6-diethyl-4-methylphenyl)-1,2,4,5-tetrahydro-7-oxo-7H-pyrazolo[1,2-d][1,4,5]oxadiazepin-9-yl] ester (pinoxaden) and
[N-(5,7-dimethoxy[1,2,4]triazolo[1,5-a]pyrimidin-2-yl)-2-methoxy-4-(trifluoromethyl)-3-pyridinesulfonamide,
including their respective agricultural acceptable salts.

4. A herbicidal active composition as claimed in claims 1 to 3 in which the variables $R^1$ to $R^7$ in formula I have the meanings

$R^1$ is methyl or $NH_2$ ;
$R^2$ is trifluoromethyl;
$R^3$ is hydrogen, fluorine or chlorine;
$R^4$ is halogen or cyano;
$R^5$ is hydrogen;
$R^6$, $R^7$ independently of one another are hydrogen, $C_1$-$C_6$-alkyl, $C_3$-$C_6$-alkenyl, $C_3$-$C_6$-alkynyl, $C_3$-$C_7$-cycloalkyl, $C_3$-$C_7$-cycloalkenyl, phenyl or benzyl, or
$R^6$, $R^7$ together with the nitrogen atom to which they are attached form a pyrrolidine, piperidine, morpholine, N-methylpiperazine or perhydroazepine ring.

5. A herbicidal active composition as claimed in claims 1 to 4, in which $R^6$, $R^7$ in formula I are identical or different $C_1$-$C_6$-alkyl radicals.

6. A herbicidal active composition as claimed in claims 1 to 5, in which the compounds C are selected from the group consisting of benoxacor, cloquintocet, dichlormid, fenchlorazole, fenclorim, fluxofenim, furilazole, isoxadifen, mefenpyr, 2,2,5-trimethyl-3-(dichloracetyl)-2,3-oxazolidine, 4-(dichloroacetyl)-1-oxa-4-azaspiro[4.5]decane and oxabetrinil and/or an agriculturally acceptable salt thereof and/or, in the case of compounds having a COOH group, an agriculturally acceptable derivative.

7. A herbicidal active composition as claimed in claims 1 to 6 in which the herbicide B is 4-hydroxy-3-{[2-(2-methoxyethoxy)methyl-6-(trifluoromethyl)-3-pyridinyl)carbonyl}bicyclo[3.2.1]oct-3-en-2-one or its agriculturally acceptable salts.

8. A herbicidal active composition as claimed in claims 1 to 6 in which the herbicid B is pivalic acid [8-(2,6-diethyl-4-methylphenyl)1,2,4,5-tetrahydro-7-oxo-7H-pyrazolo[1,2-d][1,4,5]oxadiazepin-9-yl] ester (pinoxaden), or one of its agriculturally acceptable salts.

9. A herbicidal active composition as claimed in claim 1 to 6 in which the herbicide B is [N-(5,7-dimethoxy[1,2,4]triazolo[1,5-a]pyrimidin-2-yl)-2-methoky-4-(trifluoromethyl)-3-pyridinesulfonamide or one of its agriculturally acceptable salts.

10. A herbicidal agent, comprising the herbicidal active composition as claimed in claims 1 to 9, at least one inert liquid and/or solid carrier, if desired at least one surfactant and, if appropriate at least one further auxiliary.

11. A method for controlling undesirable vegetation, which comprisis allowing a herbicidally effective amount of a composition as claimed in claims 1 to 9 to act on plants, their habitat or on seed.

12. A method as claimed in claim 11, which comprises applying a herbicidal ative composition as claimed in claims 1 to 9, during and/or after emergence of the undesirable plants, simultaneously or in succession.

13. The use of compositions as claimed in claims 1 to 9 for controlling undesirable vegetation in crops of cereals or in crops of corn.

14. The use of compositions as claimed in claims 1 to 9 for controlling undesirable vegetation in forestry.

15. The use of compositions as claimed in claims 1 to 9 for controlling undesirable vegetation in crops of plants where the crop plants are resistant to one or more herbicides owing to genetical engineering and/or breeding.

**Patentansprüche**

1. Herbizide aktive Zusammensetzung, umfassend 3-Phenyluracile der Formel I

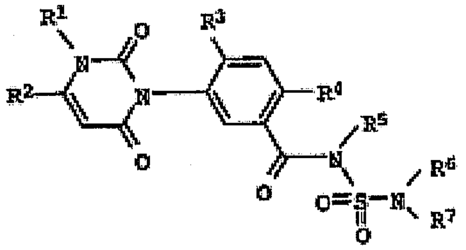

(I)

wobei die Variablen $R^1$ - $R^7$ wie folgt definiert sind:

$R^1$ ist Methyl oder $NH_2$;
$R^2$ ist $C_1$-$C_2$-Haloalkyl;
$R^3$ ist Wasserstoff oder Halogen;
$R^4$ ist Halogen oder Cyano;
$R^5$ ist Wasserstoff, Cyano, $C_1$-$C_6$-Alkyl, $C_1$-$C_6$-Alkoxy, $C_1$-$C_4$-Alkoxy-$C_1$-$C_4$-Alkyl, $C_3$-$C_7$-Cycloalkyl, $C_3$-$C_6$-Alkenyl, $C_3$-$C_6$-Alkynyl oder Benzyl, das unsubstituiert ist oder substituiert wird durch Halogen oder Alkyl;
$R^6$, $R^7$ sind unabhängig voneinander Wasserstoff, $C_1$-$C_6$-Alkyl, $C_1$-$C_6$-Alkoxy, $C_3$-$C_6$-Alkenyl, $C_3$-$C_6$-Alkynyl, $C_3$-$C_7$-Cycloalkyl, $C_3$-$C_7$-Cycloalkenyl, Phenyl oder Benzyl, wobei jede der 8 oben ge-nannten Substituenten unsubstituiert ist oder durch 1 bis 6 Halogenatome und/oder durch eine, zwei oder drei der folgenden Gruppen substituiert ist: OH, $NH_2$, CN, $CONH_2$, $C_1$-$C_4$-Alkoxy, $C_1$-$C_4$-Haloalkoxy, $C_1$-$C_4$-Alkylthio, $C_1$-$C_4$-Haloalkylthio, $C_1$-C4-Alkylsulfonyl, $C_1$-$C_4$-Haloalkylsulfonyl, $C_1$-$C_4$-Alkylamino, Di ($C_1$-$C_4$-alkyl) amino, Formyl, $C_1$-$C_4$-Alkylcarbonyl, $C_1$-$C_4$-Alkoxycarbonyl, $C_1$-$C_4$-Alkylaminocarbonyl, Di ($C_1$-$C_4$-alkyl) aminocarbonyl, $C_3$-$C_7$-Cycloalkyl, Phenyl und Benzyl; oder
$R^6$, $R^7$ bilden zusammen mit dem Stickstoffatom, an dem sie gebunden sind, einen 3-, 4-, 5-, 6-oder 7-teiligen gesättigten oder ungesättigten Stickstoffheterocyclus, der durch 1 bis 6 Methylgruppen substituiert werden kann und 1 oder 2 weitere Heteroatome, ausgewählt aus der Gruppe von Stickstoff, Sauerstoff und Schwefel, als Ringbestandteile besitzen kann,

einschließlich ihrer landwirtschaftlich annehmbaren Salze;
und
mindestens ein weiteres Herbizid, ausgewählt aus der Gruppe:

Aminopyralid und seine landwirtschaftlich annehmbaren Derivate, 4-Hydroxy-3-{[2-methyl-6-(trifluormethyl)-3-pyridinyl]carbonyl}bicyclo-[3.2.1]oct-3-en-2-on, 4-Hydroxy-3-{[2-(2-methoxyethoxy)methyl-6-(trifluormethyl)-3-pyridinyl]carbonyl}bicyclo[3.2.1]oct-3-en-2-on, 4-Hydroxy-3-[4-(methylsulfonyl)-2-nitrobenzoyl]bicyclo[3.2.1]oct-3-en-2-on, 8-(2,6-Diethyl-4-methylphenyl)-1,2,4,5-tetrahydro-9-hydroxy-7H-pyrazolo[1,2-d][1,4,5]oxadiazepin-7-on, Pivalinsäure-[8-(2,6-diethyl-4-methylphenyl)-1,2,4,5-tetrahydro-7-oxo-7H-pyrazolo[1,2-d][1,4,5]oxadiazepin-9-yl]-ester (Pinoxaden) und [N-(5,7-Dimethoxy[1,2,4]triazolo[1,5-a]pyrimidin-2-yl)-2-methoxy-4-(trifluormethyl)-3-pyridinsulfonamid,

einschließlich ihrer jeweiligen landwirtschaftlich annehmbaren Salze;
und gegebenenfalls
mindestens ein Safener ausgewählt aus der Gruppe: Benoxacor, Cloquintocet, Cyometrinil, Dichlormid, Dicyclonon, Dietholat, Fenchlorazol, Fenclorim, Flurazol, Fluxofenim, Furilazol, Isoxadifen, Mefenpyr, Mephenat, Naphthalsäureanhydrid, 2,2,5-Trimethyl-3-(diChloracetyl)-1,3-oxazolidin (R-29148), 4-(DiChloracetyl)-1-oxa-4-azaspiro[4,5]decan (AD-67, MON 4660) und Oxabetrinil,
einschließlich ihrer landwirtschaftlich annehmbaren Salze und unter der Voraussetzung, dass sie eine Carboxylgruppe besitzen, ihrer landwirtschaftlich annehmbaren Derivate.

**2.** Herbizide aktive Zusammensetzung nach Anspruch 1, in der die Herbizide B ausgewählt sind aus der Gruppe:

Aminopyralid und seine landwirtschaftlich annehmbaren Derivate, 4-Hydroxy-3-{[2-methyl-6-(trifluormethyl)-3-pyridinyl]carbonyl}bicyclo-[3.2.1]oct-3-en-2-on, 4-Hydroxy-3-{[2-(2-methoxyethoxy)methyl-6-(trifluormethyl)-3-pyridinyl]carbonyl}bicyclo[3.2.1]oct-3-en-2-on, 4-Hydroxy-3-[4-(methylsulfonyl)-2-nitrobenzoyl]bicyclo[3.2.1]-oct-3-en-2-on, 8-(2,6-Diethyl-4-methylphenyl)-1,2,4,5-tetrahydro-9-hydroxy-7H-pyrazolo[1,2-d][1,4,5]oxadiazepin-7-on und Pivaliensäure-[8-(2,6-diethyl-4-methylphenyl)-1,2,4,5-tetrahydro-7-oxo-7H-pyrazolo-[1,2-d][1,4,5]oxadiazepin-9-yl]-ester (Pinoxaden), einschließlich ihrer jeweiligen landwirtschaftlich annehmbaren Salze.

**3.** Herbizide aktive Zusammensetzung nach Anspruch 1 oder 2, in der die Herbizide B ausgewählt sind aus der Gruppe:

Aminopyralid und seine landwirtschaftlich annehmbaren Derivate, 4-Hydroxy-3-{[2-(2-methoxyethoxy)methyl-6-(trifluormethyl)-3-pyridinyl]carbonyl}bicyclo[3.2.1]oct-3-en-2-on, Pivaliensäure-[8-(2,6-diethyl-4-methylphenyl)-1,2,4,5-tetrahydro-7-oxo-7H-pyrazolo-[1,2-d][1,4,5]oxadiazepin-9-yl]-ester (Pinoxaden)
und
[N-(5,7-Dimethoxy[1,2,4]triazolo[1,5-a]pyrimidin-2-yl)-2-methoxy-4-(trifluormethyl)-3-pyridinsulfonamid,

einschließlich ihrer jeweiligen landwirtschaftlich annehmbaren Salze.

**4.** Herbizide aktive Zusammensetzung nach Anspruch 1 bis 3, bei der die Variablen $R^1$ bis $R^7$ in Formel I die Bedeutungen

$R^1$ ist Methyl oder $NH_2$;
$R^2$ ist TriFluormethyl;
$R^3$ ist Wasserstoff, Fluor oder Chlor;
$R^4$ ist Halogen oder Cyano;
$R^5$ ist Wasserstoff;
$R^6$, $R^7$ sind unabhängig voneinander Wasserstoff, $C_1$-$C_6$-Alkyl, $C_3$-$C_6$-Alkenyl, $C_3$-$C_6$-Alkynyl, $C_3$-$C_7$-Cycloalkyl, $C_3$-$C_7$-Cycloalkenyl, Phenyl oder Benzyl oder
$R^6$, $R^7$ bilden zusammen mit dem Stickstoffatom, an dem sie gebunden sind, einen Pyrrolidin-, Piperidin-, Morpholin-, N-methylpiperazin-oder Perhydroazepinring

haben.

**5.** Herbizide aktive Zusammensetzung nach Ansprüchen 1 bis 4, bei der $R^6$, $R^7$ in Formel I identische oder verschiedene $C_1$-$C_6$-Alkylreste sind.

**6.** Herbizide aktive Zusammensetzung nach Ansprüchen 1 bis 5, bei dem die Verbindungen C aus der Gruppe Benoxacor, Cloquintocet, Dichlormid, Fenchlorazol, Fenclorim, Fluxofenim, Furilazol, Isoxadifen, Mefenpyr, 2,2,5-Trimethyl-3-(diChloracetyl)-1,3-oxazolidin, 4-(DiChloracetyl)-1-oxa-4-azaspiro-[4,5]decan und Oxabetrinil; und/oder einem landwirtschaftlich annehmbaren Salz davon und/oder, im Fall von Verbindungen mit einer COOH-Gruppe, einem landwirtschaftlich annehmbaren Derivat ausgewählt sind.

**7.** Herbizide aktive Zusammensetzung nach Ansprüchen 1 bis 6, in der das Herbizid B 4-Hydroxy-3-{[2-(2-methoxyethoxy)methyl-6-(trifluormethyl)-3-pyridinyl)carbonyl}bicyclo[3.2.1]oct-3-en-2-on oder dessen landwirtschaftlich annehmbare Salze ist bzw. sind.

**8.** Herbizide aktive Zusammensetzung nach Ansprüchen 1 bis 6, in der das Herbizid B Pivalinsäure-[8-(2,6-Diethyl-4-methylphenyl)1,2,4,5-tetrahydro-7-oxo-7H-pyrazolo[1,2-d][1,4,5]oxadiazepin-9-yl]-ester (Pinoxaden) oder eines seiner landwirtschaftlich annehmbaren Salze ist.

**9.** Herbizide aktive Zusammensetzung nach Ansprüchen 1 bis 6, in der das Herbizid B [N-(5,7-Dimethoxy[1,2,4]triazolo[1,5-a]pyrimidin-2-yl)-2-methoxy-4-(trifluormethyl)-3-pyridinsulfonamid oder eines seiner landwirtschaftlich annehmbaren Salze ist.

**10.** Herbizidmittel umfassend die herbizide aktive Zusammensetzung nach Ansprüchen 1 bis 9, mindestens einen inaktiven flüssigen und/oder, festen Trägerstoff, bei Bedarf mindestens ein Tensid und, falls zutreffend, einen weiteren Zusatzstoff.

**11.** Verfahren zur Kontrolle von unerwünschter Vegetation, das umfasst, es einer herbizidwirksamen Menge einer Zusammensetzung nach Ansprüchen 1 bis 9 zu ermöglichen, auf Pflanzen, ihren Standort oder ihre Saat zu wirken.

**12.** Verfahren nach Anspruch 11, umfassend die gleichzeitig oder nacheinander erfolgende Anwendung einer herbiziden aktiven Zusammensetzung nach Ansprüchen 1 bis 9, während und/oder nach dem Keimen der unerwünschten Pfanzen.

**13.** Verwendung von Zusammensetzungen nach Ansprüchen 1 bis 9 zur Kontrolle von unerwünschter Vegetation in Getreidepflanzen oder in Maispflanzen.

**14.** Verwendung von Zusammensetzungen nach Ansprüchen 1 bis 9 zur Kontrolle von unerwünschter Vegetation in der Forstwirtschaft.

**15.** Verwendung von Zusammensetzungen nach Ansprüchen 1 bis 9 zur Kontrolle von unerwünschter Vegetation in Kulturpflanzen, die durch Genmanipulation und/oder Züchtung resistent gegenüber einem oder mehreren Herbiziden sind.

## Revendications

**1.** Composition herbicide active comprenant des 3-phényluraciles de formule I :

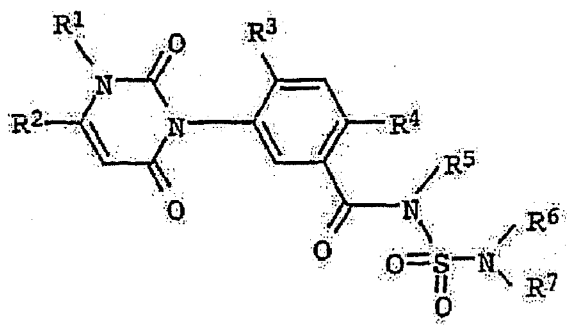

(I)

dans laquelle les variables $R^1$ à $R^7$ sont telles que définies ci-dessous .

$R^1$ est un méthyle ou $NH_2$ ;
$R^2$ est un halogénoalkyle en $C_1$-$C_2$ ;
$R^3$ est l'hydrogène ou un halogène ;
$R^4$ est un halogène ou un cyano ;
$R^5$ représente l'hydrogène, un groupe cyano, alkyle en $C_1$-$C_6$, alcoxy en $C_1$-$C_6$, alcoxy-($C_1$-$C_4$) -alkyl ($C_1$-$C_4$) , cycloalkyle en $C_3$-$C_7$, alcényle en $C_3$-$C_6$, alcynyle en $C_3$-$C_6$ ou benzyle, qui est non substitué ou substitué par un atome d'halogène ou par un alkyle en $C_1$-$C_6$ ;
$R^6$, $R^7$ représentent, indépendamment l'un de l'autre, l'hydrogène, un groupe alkyle en $C_1$-$C_6$, alcoxy en $C_1$-$C_6$, alcényle en $C_3$-$C_6$, alcynyle en $C_3$-$C_6$, cycloalkyle en $C_3$-$C_7$, cycloalcényle en $C_3$-$C_7$, phényle ou benzyle, chacun des 8 substituants mentionnés ci-dessus étant non substitué ou substitué par 1 à 6 atomes d'halogène et/ou par un, deux ou trois groupes choisis parmi : OH, $NH_2$, CN, $CONH_2$, un alcoxy en $C_1$-$C_4$, un halogénoalcoxy en $C_1$-$C_4$, un alkylthio en $C_1$-$C_4$, un halogénoalkylthio en $C_1$-$C_4$, un alkylsulfonyle en $C_1$-$C_4$, un halogénoalkylsulfonyle en $C_1$-$C_4$, un alkylamino en $C_1$-$C_4$, un di (alkyle en $C_1$-$C_4$)amino, un formyle, un alkylcarbonyle en $C_1$-$C_4$, un alcoxycarbonyle en $C_1$-$C_4$, un alkylaminocarbonyle en $C_1$-$C_4$, un di(alkyle en $C_1$-$C_4$) aminocarbonyle, un cycloalkyle en $C_3$-$C_7$, un phényle et un benzyle ; ou

$R^6$, $R^7$ forment, conjointement avec l'atome d'azote auquel ils sont liés, un hétérocycle azoté à 3, 4, 5, 6 ou 7 éléments, saturé ou insaturé, qui peut être substitué par 1 à 6 groupes méthyle et qui peut contenir 1 ou 2 autres hétéroatomes choisis dans le groupe constitué de l'azote, de l'oxygène et du soufre comme éléments du cycle,

y compris leurs sels acceptables au plan agricole ;
et au moins un autre herbicide B choisi parmi le groupe constitué de :

l'aminopyralide et ses dérivés acceptables au plan agricole,
la 4-hydroxy-3-{[2-méthyl-6-(trifluorométhyl)-3-pyridinyl]carbonyl}bicyclo[3,2,1]oct-3-én-2-one,
la 4-hydroxy-3-{[2-(2-méthoxyéthoxy)méthyl-6-(trifluorométhyl)-3-pyridinyl]carbonyl}bicyclo-[3,2,1]oct-3-én-2-one,
la 4-hydroxy-3-[4-(méthylsulfonyl)-2-nitrobenzoyl]bicyclo[3,2,1]oct-3-én-2-one,
la 8-(2,6-diéthyl-4-méthylphényl)-1,2,4,5-tétrahydro-9-hydroxy-7H-pyrazolo[1,2-d][1,4,5]oxadiazépin-7-one,
l'ester [8-(2,6-diéthyl-4-méthylphényl)-1,2,4,5-tétrahydro-7-oxo-7H-pyrazolo[1,2-d][1,4,5]oxadiazépin-9-ylique] de l'acide pivalique (pinoxaden) et
le [N-(5,7-diméthoxy[1,2,4]triazolo[1,5-a]-pyrimidin-2-yl)-2-méthoxy-4-(trifluorométhyl)-3-pyridinesulfonamide,

y compris leurs sels respectifs acceptables au plan agricole ;
et, éventuellement,
au moins un phytoprotecteur C, choisi parmi le groupe comprenant les composés bénoxacor, cloquintocet, cyométrinile, dichlormide, dicyclonon, diétholate, fenchlorazole, fenclorim, flurazole, fluxofénime, furilasole, isoxadifène, méfenpyr, méphénate, anhydrure naphtalique, 2,2,5-triméthyl-3-(dichloroacétyl)-1,3-oxazolidine (R-29148), 4-(dichloracétyl)-1-oxa-4-azaspiro[4,5]-décane (AD-67, MON 4660) et oxabétrinile,
y compris leurs sels acceptables au plan agricole et, à condition qu'ils contiennent un groupe carboxyle, leurs dérivés acceptables au plan agricole.

**2.** Composition herbicide active selon la revendication 1, dans laquelle les herbicides B sont choisis parmi le groupe constitué de :

l'aminopyralide et ses dérivés acceptables au plan agricole,
la 4-hydroxy-3-{[2-méthyl-6-(trifluorométhyl)-3-pyridinyl]carbonyl}bicyclo[3,2,1]oct-3-én-2-one,
la 4-hydroxy-3-{[2-(2-méthoxyéthoxy)méthyl-6-(trifluorométhyl)-3-pyridinyl]carbonyl}bicyclo-[3,2,1]oct-3-én-2-one,
la 4-hydroxy-3-[4-(méthylsulfonyl)-2-nitrobenzoyl]bicyclo[3,2,1]oct-3-én-2-one,
la 8-(2,6-diéthyl-4-méthylphényl)-1,2,4,5-tétrahydro-9-hydroxy-7H-pyrazolo[1,2-d][1,4,5]oxadiazépin-7-one et
l'ester [8-(2,6-diéthyl-4-méthylphényl)-1,2,4,5-tétrahydro-7-oxo-7H-pyrazolo[1,2-d][1,4,5]oxadiazépin-9-ylique] de l'acide pivalique (pinoxaden),

y compris leurs sels respectifs acceptables au plan agricole.

**3.** Composition herbicide active selon la revendication 1 ou 2, dans laquelle les herbicides B sont choisis parmi le groupe constitué de :

l'aminopyralide et ses dérivés acceptables au plan agricole,
la 4-hydroxy-3-{[2-(2-méthoxyéthoxy)méthyl-6-(trifluorométhyl)-3-pyridinyl]carbonyl}bicyclo-[3, 2, 1] oct-3-én-2-one,
l'ester [8-(2,6-diéthyl-4-méthylphényl)-1,2,4,5-tétrahydro-7-oxo-7H-pyrazolo[1,2-d][1,4,5]oxadiazépin-9-ylique] de l'acide pivalique (pinoxaden) et
le [N-(5,7-diméthoxy [1,2,4]triazolo[1,5-a] - pyrimidin-2-yl)-2-méthoxy-4-(trifluorométhyl)-3-pyridinesulfonamide,

y compris leurs sels respectifs acceptables au plan agricole.

**4.** Composition herbicide active selon les revendications 1 à 3, dans laquelle les variables $R^1$ à $R^7$ dans la formule I ont les significations

$R^1$ est un méthyle ou $NH_2$ ;

$R^2$ est un trifluorométhyle ;
$R^3$ représente l'hydrogène, le fluor ou le chlore ;
$R^4$ est un halogène ou un cyano ;
$R^5$ est l'hydrogène ;
$R^6$ $R^7$ représentent, indépendamment l'un de l'autre, l'hydrogène, un groupe alkyle en $C_1$-$C_6$, alcényle en $C_3$-$C_6$, alcynyle en $C_3$-$C_6$, cycloalkyle en $C_3$-$C_7$, cycloalcényle en $C_3$-$C_7$, phényle ou benzyle, ou
$R^6$ $R^7$ forment, conjointement avec l'atome d'azote auquel ils sont liés, un cycle de pyrrolidine, de pipéridine, de morpholine, de N-méthylpipérazine ou de perhydroazépine.

**5.** Composition herbicide active selon les revendications 1 à 4, dans laquelle $R^6$, $R^7$ dans la formule I sont des radicaux alkyle en $C_1$-$C_6$ identiques ou différents.

**6.** Composition herbicide active selon les revendications 1 à 5, dans laquelle les composés C sont choisis parmi le groupe comprenant les composés bénoxacor, cloquintocet, dichlormide, fenchlorazole, fenclorim, fluxofénim, furilazole, isoxadifène, méfenpyr, 2,2,5-triméthyl-3-(dichloroacétyl)-1,3-oxazolidine, 4-(dichloroacétyl)-1-oxa-4-azaspiro[4,5]décane et oxabétrinile, et/ou leurs sels acceptables au plan agricole et/ou, dans le cas de composés ayant un groupe COOH, un dérivé acceptable au plan agricole.

**7.** Composition herbicide active selon les revendications 1 à 6, dans laquelle l'herbicide B est la 4-hydroxy-3-{[2-(2-méthoxyéthoxy)méthyl-6-(trifluorométhyl)-3-pyridinyl]carbonyl}bicyclo-[3,2,1] oct-3-én-2-one ou ses sels acceptables au plan agricole.

**8.** Composition herbicide active selon les revendications 1 à 6, dans laquelle l'herbicide B est l'ester [8-(2,6-diéthyl-4-méthylphényl)-1,2,4,5-tétrahydro-7-oxo-7H-pyrazolo[1,2-d]-[1,4,5]oxadiazépin-9-ylique], de l'acide pivalique (pinoxaden) ou l'un de ses sels acceptables au plan agricole.

**9.** Composition herbicide active selon les revendications 1 à 6, dans laquelle l'herbicide B est le N-(5,7-diméthoxy [1,2,4]triazolo[1,5-a] - pyrimidin-2-yl)-2-méthoxy-4-(trifluorométhyl)-3-pyridinesulfonamide ou l'un de ses sels acceptables au plan agricole.

**10.** Agent herbicide comprenant la composition herbicide active selon les revendications 1 à 9, au moins un véhicule inerte liquide et/ou solide, si on le souhaite, au moins un tensioactif et, si cela est approprié, au moins un autre auxiliaire.

**11.** Procédé de régulation de la végétation indésirable qui comprend l'étape consistant à faire agir une quantité active au plan herbicide d'une composition selon les revendications 1 à 9 sur des plantes, leur habitat ou sur des semences.

**12.** Procédé selon la revendication 11 qui comprend l'étape consistant à appliquer une composition herbicide active, selon les revendications 1 à 9, pendant et/ou après l'émergence des plantes indésirables, simultanément ou successivement.

**13.** Utilisation de compositions selon les revendications 1 à 9, pour réguler la végétation indésirable dans des cultures de céréales ou dans des cultures de maïs.

**14.** Utilisation de compositions selon les revendications 1 à 9, pour réguler la végétation indésirable en sylviculture.

**15.** Utilisation de compositions selon les revendications 1 à 9, pour réguler la végétation indésirable dans des cultures dans lesquelles les plantes cultivées résistent, par génie génétique et/ou par croisement, à un ou plusieurs herbicides.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 0183459 A
- WO 0324221 A
- WO 200015615 A
- WO 200194339 A
- WO 200000029 A
- WO 199947525 A
- WO 200047585 A
- WO 200236595 A
- WO 200183459 A


### Non-patent literature cited in the description


- *The Compendium of Pesticide Common Names, http://www.hclrss.demon.co.uk/index.html*
- Farm Chemicals Handbook 2000. Meister Publishing Company, 2000, vol. 86
- **B. HOCK ; C. FEDTKE ; R. R. SCHMIDT.** Herbizide. Georg Thieme Verlag, 1995
- **W. H. AHRENS.** Herbicide Handbook. *Weed Science Society of America,* 1994
- **K. K. HATZIOS.** Herbicide Handbook. Weed Science Society of America, 1998
- **S. R. COLBY.** Calculating synergistic and antagonistic responses of herbicide combinations. *Weeds,* 1967, vol. 15, 22 ff